# EUROPEAN PATENT SPECIFICATION

(11) **EP 2 830 409 B1**
(45) Date of publication and mention of the grant of the patent: **23.08.2017**
(21) Application number: 13711912.9
(22) Date of filing: 26.03.2013
(51) Int. Cl.: A01F 15/08, F16H 27/08, A01D 69/08

(54) **SINGLE REVOLUTION CLUTCH, DRIVE SYSTEM AND SQUARE BALER COMPRISING SUCH CLUTCH AND USE OF SUCH CLUTCH, DRIVE SYSTEM OR SQUARE BALER**
EINTOURENKUPPLUNG, ANTRIEBSSYSTEM UND QUADERBALLENPRESSE MIT SOLCHER KUPPLUNG UND GEBRAUCH SOLCHER KUPPLUNG, ANTRIEBSSYSTEM ODER QUADERBALLENPRESSE
EMBRAYAGE À SIMPLE REVOLUTION, SYSTÈME D'ENTRAÎNEMENT ET PRESSE À BALLES CARRÉES COMPRENANT UN TEL EMBRAYAGE ET UTILISATION DU TEL EMBRAYAGE, SYSTÈME D'ENTRAÎNEMENT OU PRESSE À BALLES CARRÉES

(30) Priority: 26.03.2012 BE 201200209
(43) Date of publication of application: 04.02.2015
(73) Proprietor: CNH Industrial Belgium nv, 8210 Zedelgem (BE)
(72) Inventor: VAN GAEVEREN, Filip, B-9220 Hamme (BE)
(74) Representative: CNH Industrial IP Department
(86) International application number: PCT/EP2013/056349
(87) International publication number: WO 2013/144114

(56) References cited:
- DE-A1- 1 447 380
- DE-C- 278 744
- DE-C- 280 756
- US-A1- 2011 026 971

## Description

The current invention relates to a single revolution clutch according to the preamble of the first claim.

The current invention also relates to a drive system and square baler comprising such single revolution clutch and the use of such single revolution clutch, drive system or square baler.

Single revolution clutches are already known to the person skilled in the art. US5937746 for example describes a single revolution clutch. The single revolution clutch mechanically interconnects a first drive shaft to a second drive shaft such that the second drive shaft can be driven by the first shaft into a single revolution. The first shaft is substantially continuously driven. The clutch comprises a first gear to be connected to the first shaft. The second shaft is connected to a linkage controlling the motion of needles for presenting twine to knotters. Means are provided for allowing the second shaft to perform single revolutions, the means comprising a dog and key assembly, a spring and a dog roller with cooperating cam lobe.

DE 280756 discloses a similar single revolution clutch for driving the knotters in a square baler.

DE 1 447 380 describes a one cycle drive mechanism for selectively rotating a member of a machine. The one cycle drive mechanism has a continuously rotating gear and a mutilated gear meshing with the rotating gear. The mutilated gear has a portion without teeth, and when facing the rotating gear, will prevent the engagement of the mutilated gear with the teeth of the rotating gear. When being rotated through a predetermined extent, the two gears will be able to engage with each other.

However, as the means for allowing the second shaft to perform single revolutions comprises several components, it is complicated and prone to malfunctioning.

Therefore, it is an aim of the current invention to provide a single revolution clutch which is less prone to malfunctioning.

This is achieved according to the single revolution clutch according to the characterizing part of the first claim. According to the preamble of the first claim the clutch comprises a second gear to be connected to the second shaft. Further, a first angular part of the circumference of the second gear is provided with teeth delimited by a first and a second delimiting tooth and a second angular part of the circumference of the second gear between the first and the second delimiting teeth form an opening. The first gear is provided for drivingly interlocking with the second gear over the first angular part of the second gear and is provided to disengage the first gear at the second angular part of the second gear, the opening receiving the teeth of the first gear, at a disengaged angular position of the second gear. The single revolution clutch comprises fixing means for keeping the second gear in the disengaged angular position, engaging means for rotating the second gear from the disengaged angular position to an engaged angular position wherein the first gear drivingly interlocks with the first delimiting tooth of the second gear and disengaging means for rotating the second gear from a release angular position wherein the first gear drivingly interlocks with the second delimiting tooth of the second gear towards the disengaged angular position after having rotated interlockingly driven by the first gear. The single revolution clutch comprises timing means for controlling the engaging, disengaging and fixing means such that a single revolution of the second gear is obtained by:
- an engagement phase, wherein the timing means control the engaging means such that the second gear is rotated from the disengaged angular position to the engaged angular position,
- a subsequent driving phase in which the first gear interlockingly drives the second gear from the engaged angular position to the release angular position,
- a subsequent disengagement phase wherein the timing means control the disengaging means such that the second gear is rotated from the release angular position to the disengaged angular position and
- a subsequent fixing phase wherein the timing means control the fixing means such that the second gear is kept in the disengaged angular position.

According to the characterizing part of the first claim of the current invention, the engaging means comprise a first member radially extending from either the first or the second shaft and a second member extending from the other shaft, the first and the second member being provided to rotate together with the shaft from which they extend, the first member comprising an engaging roller at its end, the second member comprising a guiding path for receiving the engaging roller such that the rotating motion of the first shaft is transferred to the second shaft upon engagement of the first and the second member, rotating the second gear from the disengaged angular position to the engaged angular position wherein the first gear drivingly interlocks with the first delimiting tooth of the second gear, the first and the second member being moveably mounted with respect to each other along the respective shafts to which they are mounted between an engaging position in which the first and the second member engage each other and a disengaging position in which the first and the second member do not engage each other. It has been found that such a single revolution clutch is mechanically less complicated and therefore less prone to malfunctioning as the single revolution is being driven by two interlocking gears.

Moreover, it has been found that the use of the first and the second interlocking gears allows the single clutch to be used in applications requiring relatively large forces to be transferred, large torques to be applied and/or high rotational speeds of the gears. Without wanting to be bound by any theory, it is believed that using the interlocking first and second gear allows for a more continuous driving of the second shaft by the first shaft allowing for the single revolution clutch to be used in more demanding applications requiring relatively large forces to be transferred, large torques to be applied and/or high rotational speeds of the gears.

According to further preferred embodiments of the current invention, the first member extends from the first shaft and the second member extends from the second shaft.

According to preferred embodiments of the current invention, the disengaging means comprise a first member radially extending from either the first or the second shaft and a second member extending from the other shaft, the first and the second member being provided to rotate together with the shaft from which they extend, the first member comprising a disengaging roller at its end, the second member comprising a guiding path for receiving the disengaging roller such that the rotating motion of the first shaft is transferred to the second shaft upon engagement of the first and the second member, rotating the second gear towards the disengaged angular position after having reached the second delimiting tooth after having rotated driven by the first gear, the first and the second member being moveably mounted with respect to each other along the respective shafts to which they are mounted between an engaging position in which the first and the second member engage each other and a disengaging position in which the first and the second member do not engage each other.

According to further preferred embodiments of the current invention, the first member extends from the first shaft and the second member extends from the second shaft.

The first and the second member of engaging and/or disengaging means have been found appropriate to be used in applications requiring relatively large forces to be transferred, large torques to be applied and/or high rotational speeds of the members. Moreover, it has been found that the guiding paths can be configured such that the rotational speed of the second gear in function of time does not abruptly change when engaging or disengaging the second gear but changes more continuously and/or gradually in function of time.

According to preferred embodiments of the current invention, the fixing means comprise a guiding member mounted to the second shaft and provided to rotate together with the second shaft and having a partial circular inner surface for guiding a fixing member radially extending from the first shaft provided to rotate together with the first shaft inside the partial circular inner surface to keep the second gear in the disengaged angular position, the guiding and the fixing member being moveably mounted with respect to each other along the respective shafts to which they are mounted between an engaging position in which the guiding and the fixing member engage each other and a disengaging position in which the guiding and the fixing member do not engage each other.

Such fixing means have been found appropriate to be used in applications requiring relatively large forces to be transferred, large torques to be applied and/or high rotational speeds.

According to preferred embodiments of the current invention, the timing means comprises a cam shaft provided to be driven by the rotation of the first shaft, the cam shaft comprising at least a first and a second cam and a cam follower provided to follow the circumference of the cams during rotation of the cams by rotation of the cam shaft, the cams of the cam shaft being movably mounted with respect to the cam follower between a first position and a second position, such that the cam follower follows the circumference of the first cam in the first position and the circumference of the second cam in the second position, the cam follower in the first position controlling the fixing, engaging and disengaging means such that a single revolution of the second gear is obtained and the cam follower in the second position controlling the fixing means such that the second gear is kept in the disengaged angular position.

Such timing means have been found appropriate to be used in applications requiring relatively large forces to be transferred, large torques to be applied and/or high rotational speeds.

According to further preferred embodiments of the current invention, the cam follower is slideably mounted to the first or the second shaft along longitudinal direction of the shaft, the sliding motion of the cam follower being driven by following the circumference of the cams by the cam follower, and the members of the fixing, engaging and the disengaging means extending from the shaft to which the cam follower is mounted from distinct extending positions along longitudinal direction of the shaft, are connected to the cam follower, the members of the fixing, engaging and the disengaging means extending from the shaft to which the cam follower is mounted and the first cam being configured such that, the cam follower and the cam shaft being in the first position with respect to each other, the engagement phase comprises the cam follower being slid by the circumference of the first cam to a first position in which the guiding and the fixing member of the fixing means are in the disengaging position and the first and the second member of the engaging means are in the engaging position, the first cam being further configured such that the disengagement phase comprises the cam follower subsequently sliding to a second position in which the first and the second member of the disengaging means are in the engaging position and in which the guiding and the fixing member of the fixing means are in the disengaging position, the first cam being further configured such that the fixing phase comprises the cam follower subsequently sliding to a third position in which the fixing means are in the engaged position and in which the members of the engaging and disengaging means are in the disengaging position, the cam shaft and the cam follower being provided to subsequently move to the second position with respect to each other.

Such a configuration allows the construction of a mechanical single revolution clutch, avoiding for example the use of electronics, pneumatics, etc. while allowing relatively large forces to be transferred, large torques to be applied and/or high rotational speeds.

According to preferred embodiments of the invention the cam follower is slideably mounted to the first shaft, the sliding motion of the cam follower being driven by following the circumference of the cams by the cam follower.

According to preferred embodiments of the invention, the rotation of the cam shaft is driven by a drive shaft and the drive shaft also drives the rotation of the first shaft such that the cam shaft and the first shaft rotate synchronously.

According to preferred embodiments of the current invention, the single revolution clutch comprises a toothed element which is provided for filling the opening between the first and the second delimiting tooth such as to provide teeth along the entire circumference of the second gear such as to be able to, due to the presence of the toothed element, drive the second gear into a plurality of complete revolutions. Such a toothed element makes that the second gear can be continuously interlockingly rotated by the first gear, in case a continuous rotation of the second gear is desired in a plurality of complete revolutions. The toothed element preferably is placed in between the first and the second delimiting tooth for filling the opening and to provide teeth along the entire circumference of the second gear, when the first and the second gear are in the interlocking position, after completion of the engaging phase such as to prevent a sudden interlock of the first and the second gear when placing the toothed element in between the first and the second delimiting tooth when the first and the second gear in the disengaged position with respect to each other. Preferably, an actuator provided for moving the toothed element in between the first and the second tooth thereto is provided to receive a signal to indicate that the first and the second gear are in the engaged angular position. Preferably this signal is provided by the timing means.

According to more preferred embodiments of the current invention, the toothed element is provided to be placed in the opening between the first and the second delimiting tooth by translating it along the axis of rotation of the second gear, preferably by the actuator.

More preferably, the toothed element thereto is provided to slide along the second drive shaft and rotates together with the second gear.

The invention also relates to a drive system comprising a single revolution clutch according to the invention, wherein a first drive shaft of the drive system provided to be substantially continuously rotated is connected by the single revolution clutch to a second shaft of the drive system such that the second shaft can be driven by the first shaft into a single revolution, the first gear of the clutch being connected to the first shaft and the second gear of the clutch being connected to the second shaft.

The invention also relates to a square baler comprising the drive system according to the invention, wherein the second shaft of the drive system is connected to a stuffer of the square baler.

The invention also relates to the use of the single revolution clutch according to the invention or the drive system according to the invention or the square baler according to the invention, wherein the timing means control the engaging, disengaging and fixing means such that a single revolution of the second gear is obtained by:
- an engagement phase, wherein the timing means control the engaging means such that the second gear is rotated from the disengaged angular position to the engaged angular position,
- a subsequent driving phase in which the first gear interlockingly drives the second gear from the engaged angular position to the release angular position,
- a subsequent disengagement phase wherein the timing means control the disengaging means such that the second gear is rotated from the release angular position to the disengaged angular position and
- a subsequent fixing phase wherein the timing means control the fixing means such that the second gear is kept in the disengaged angular position.

The invention will be further elucidated by means of the following description and the appended figures.
Figure 1 a shows an overview of an embodiment of the square baler with a single revolution clutch according to the invention.
Figure 1b shows a detail of figure 1a.
Figure 2 shows an overview of an embodiment of the single revolution clutch according to the invention.
Figures 3 - 6 show an overview of the single revolution clutch shown in figure 1 on different moments during its operation.
Figures 7a - 7l show a top view of the single revolution clutch shown in figure 1 on different moments during its operation.
Figures 8a - 8h show a side view of the single revolution clutch shown in figure 1 on different moments during its operation.
Figures 9a - 9h show a different side view of the single revolution clutch shown in figure 1 on different moments during its operation.
Figures 10a - 10f show a different side view of the single revolution clutch shown in figure 1 on different moments during its operation.
Figures 11a - 11i show a different side view of the single revolution clutch shown in figure 1 on different moments during its operation.
Figures 12a - 12f show a different side view of the single revolution clutch shown in figure 1 on different moments during its operation.
Figures 13a - 13e show a different side view of the single revolution clutch shown in figure 1 on different moments during its operation.
Figure 14a - 14b show an overview of a different embodiment of the single revolution clutch according to the invention.

In the following detailed description, numerous specific details are set forth in order to provide a thorough understanding of the invention and how it may be practiced in particular embodiments. However, it will be understood that the present invention may be practiced without these specific details. In other instances, well-known methods, procedures and techniques have not been described in detail, so as not to obscure the present invention. While the present invention will be described with respect to particular embodiments and with reference to certain drawings, the invention is not limited hereto. The drawings included and described herein are schematic and are not limiting the scope of the invention. It is also noted that in the drawings, the size of some elements may be exaggerated and, therefore, not drawn to scale for illustrative purposes.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B.
1. Single revolution clutch
2. First drive shaft
3. Second drive shaft
4. First gear
5. Second gear
6. First angular part
7. Second angular part
8. Teeth
9. First delimiting tooth
10. Second delimiting tooth
11. Opening
12. Disengaged angular position
13. Engaged angular position
14. Timing means
15. Engaging means
16. Disengaging means
17. Fixing means
18. Release angular position
19. First member engaging means
20. Second member engaging means
21. Engaging roller first member
22. Guiding path second member
23. Engaging position first members engaging means
24. Disengaging position engaging means
25. First member disengaging means
26. Second member disengaging means
27. Disengaging roller disengaging means
28. Guiding path disengaging means
29. Engaging position first and second members disengaging means
30. Disengaging position disengaging means
31. Guiding member fixing means
32. Fixing member fixing means
33. Engaging position fixing means
34. Disengaging position fixing means
35. Cam shaft
36. Cam follower
37. First cam
38. Second cam
39. First position cam shaft
40. Second position cam shaft
41. First position cam follower
42. Second position cam follower
43. Third position cam follower
44. Drive shaft
45. Square baler
46. Bale chamber
47. Gear box
48. Plunger
49. Toothed element
50. Actuator

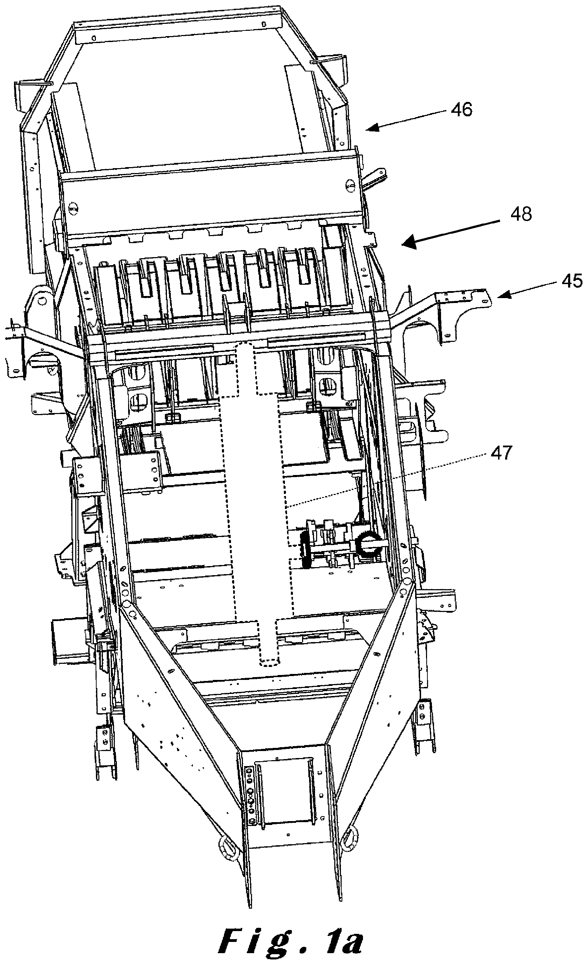

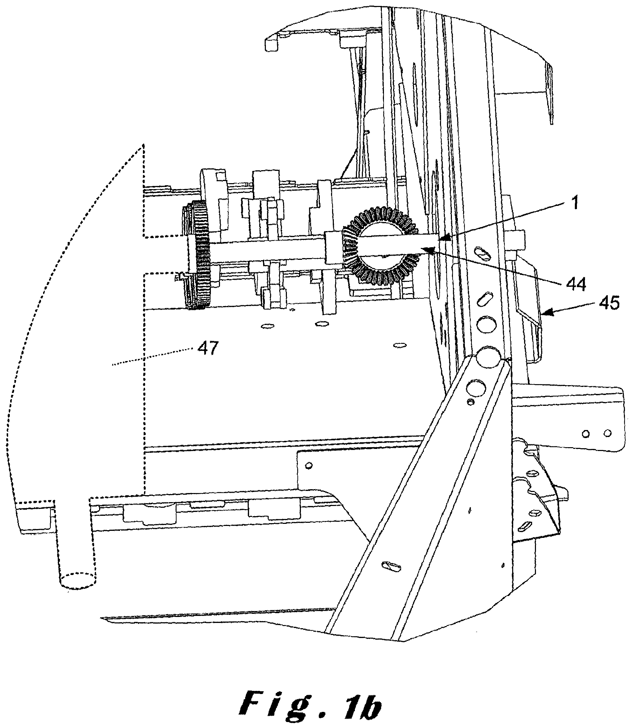

Figure 1 a shows an overview of an embodiment of the square baler 45 with a single revolution clutch 1 according to the invention. The square baler 45 comprises a bale chamber 46 with a plunger 48. A gear box 47 drives the movement of the single revolution clutch 1 and the movement of the plunger 48.

Figure 1b shows a detail of figure 1a, showing a detail of the configuration of the single revolution clutch 1 in the square baler 45 according to the invention.

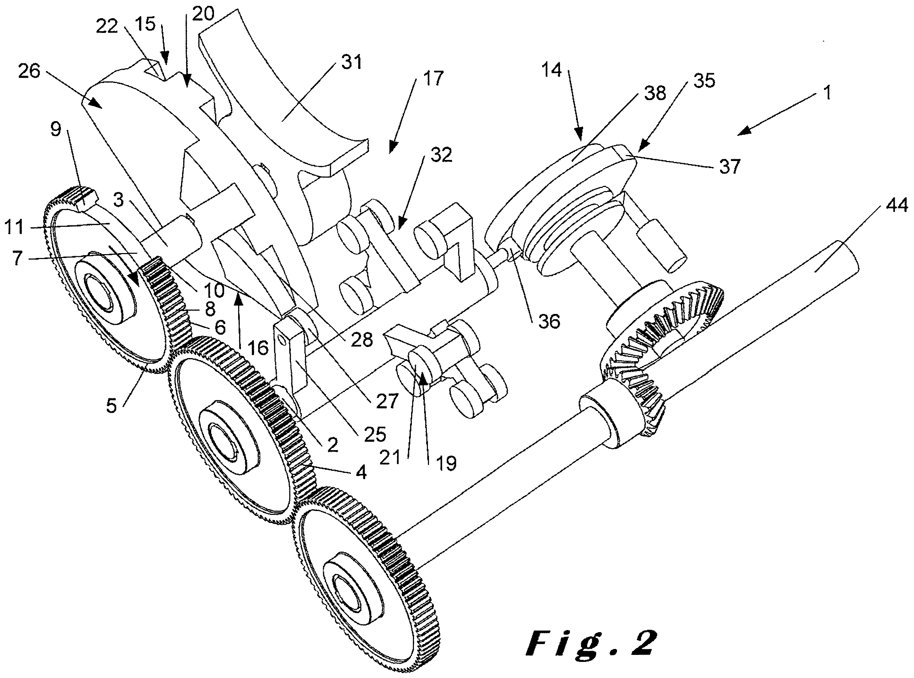

Figure 2 shows an overview of an embodiment of the single revolution clutch according to the invention.

Figure 2 shows a single revolution clutch 1 for mechanically interconnecting a first drive shaft 2, provided to be substantially continuously rotated, to a second shaft 3 such that the second shaft 3 can be driven by the first shaft 2 into a single revolution.

The clutch 1 comprises a first gear 4 to be connected to the first shaft 2. The clutch 1 comprises a second gear 5 to be connected to the second shaft 3.

Although not shown in the figures, the single revolution clutch 1 can also be part of a drive system, wherein a first drive shaft 2 of the drive system provided to be substantially continuously rotated and, preferably, in use substantially continuously rotating, is connected by the single revolution clutch 1 to a second shaft 3 of the drive system such that the second shaft can be driven by the first shaft 2 into a single revolution. The first gear 4 of the clutch 1 is connected to the first shaft 2 and the second gear 5 of the clutch is connected to the second shaft 3.

Although not shown, the second shaft 3 of the drive system can be connected to a stuffer of a square baler. The second shaft 3 of the drive system can however also be connected to other applications, preferably applications requiring relatively large forces to be transferred, large torques to be applied and/or high rotational speeds of the gears, such as for example a mechanically powered hammer for relatively large driving poles in the ground.

A first angular part 6 of the circumference of the second gear 5 is provided with teeth 8 delimited by a first and a second delimiting tooth 9, 10 and a second angular part 7 of the circumference of the second gear 5 between the first and the second delimiting teeth 9, 10 forms an opening 11. The first gear 4 is provided for drivingly interlocking with the second gear 5 over the first angular part 6 of the second gear 5 and is provided to disengage the first gear 4 at the second angular part 7 of the second gear 5. The opening 11 receives the teeth 8 of the first gear 4 at a disengaged angular position 12 of the second gear 5. The single revolution clutch 1 comprises fixing means 17 for keeping the second gear 5 in the disengaged angular position 12, engaging means 15 for rotating the second gear 5 from the disengaged angular position 12 to an engaged angular position 13, wherein the first gear 4 drivingly interlocks with the first delimiting tooth 9 of the second gear 5, and disengaging means 16 for rotating the second gear 5 from a release angular position 18 wherein the first gear 4 drivingly interlocks with the second delimiting tooth 10 of the second gear 5 towards the disengaged angular position 12 after having rotated interlockingly driven by the first gear 4 and in that the single revolution clutch 1 comprises timing means 14 for controlling the engaging 15, disengaging 16 and fixing means 17 such that a single revolution of the second gear 5 is obtained by:
- an engagement phase, wherein the timing means 14 control the engaging means 15 such that the second gear 5 is rotated from the disengaged angular position 12 to the engaged angular position 13,
- a subsequent driving phase in which the first gear 4 interlockingly drives the second gear 5 from the engaged angular position 13 to the release angular position 18,
- a subsequent disengagement phase wherein the timing means 14 control the disengaging means such that the second gear 5 is rotated from the release angular position 18 to the disengaged angular position 12 and
- a subsequent fixing phase wherein the timing means 14 control the fixing means 17 such that the second gear 5 is kept in the disengaged angular position 12.

In the single revolution clutch 1 shown in the figures, the engaging means 15 comprise a first member 19 radially extending from the first shaft 2. However, although not shown in the figures, the first member 19 can also extend from the second shaft 3.

A second member 20 further extends from the other shaft, being the second shaft 3. However, although not shown in the figures, the second member 20 can also extend from the first shaft 2 if the first member 19 extends from the second shaft 3.

The first and the second member 19, 20 are further provided to rotate together with the shaft 2, 3 from which they extend. Therefore the first member 19 is provided to rotate together with the first shaft 2 and the second member 20 is provided to rotate together with the second shaft 3. This can for example be achieved by a fixed mounting with which the first and the second member 19, 20 are attached to the first and the second shaft 2, 3.

The first member 19 further preferably comprises an engaging roller 21 at its end while the second member 20 comprises a guiding path 22 for receiving the engaging roller 21 such that the rotating motion of the first shaft 2 is transferred to the second shaft 3 upon engagement of the first and the second member 19, 20, rotating the second gear 5 from the disengaged angular position 12 to the engaged angular position 13 wherein the first gear 4 drivingly interlocks with the first delimiting tooth 9 of the second gear 5. Although, the engaging roller 21 is preferred to be received in the guiding path 22, this is not critical for the invention and other engaging means than the engaging roller 21 can be provided. However, it has been found that by using an engaging roller 21, the amount of friction is reduced leading to an improved guidance along the guiding path 22.

The first and the second member 19, 20 are further moveably mounted with respect to each other along the respective shafts 2, 3 to which they are mounted between an engaging position 23 in which the first and the second member 19, 20 engage each other and a disengaging position 24 in which the first and the second member 19, 20 do not engage each other.

Figure 2 further shows that the disengaging means 16 comprise a first member 25 radially extending from the first shaft 2 and a second member 26 extending from the other shaft. However, although not shown in the figures, the second member 26 can also extend from the first shaft 2 if the first member 25 extends from the second shaft 3.

The first and the second member 25, 26 are further provided to rotate together with the shaft from which they extend. Therefore the first member 25 is provided to rotate together with the first shaft 2 and the second member 26 is provided to rotate together with the second shaft 3. This can for example be achieved by a fixed mounting with which the first and the second member 25, 26 are attached to the first and the second shaft 2, 3.

The first member 25 further comprises a disengaging roller 27 at its end while the second member 26 comprises a guiding path 28 for receiving the disengaging roller 27 such that the rotating motion of the first shaft 2 is transferred to the second shaft 3 upon engagement of the first and the second member 25, 26, rotating the second gear 5 towards the disengaged angular position 12 after having reached the second delimiting tooth 10 after having rotated driven by the first gear 4, the first and the second member 25, 26 being moveably mounted with respect to each other along the respective shafts to which they are mounted between an engaging position 29 in which the first and the second member 25, 26 engage each other and a disengaging position 30 in which the first and the second member 25, 26 do not engage each other. Although, the disengaging roller 27 is preferred to be received in the guiding path 28, this is not critical for the invention and other engaging means than the disengaging roller 27 can be provided. However, it has been found that by using an disengaging roller 27, the amount of friction is reduced leading to an improved guidance along the guiding path 28.

Figure 2 shows that the second members 20, 26 of the engaging and disengaging means 15, 16 are in the form of at least part of a disc, such as for example a full disc or a disc's sector. In such a second member 20, 26, the guiding paths 22, 28 are in the form of paths applied in the surface of the at least part of the disc, as is shown in figure 2. This is however not critical for the invention and also other embodiments are possible.

Figure 2 moreover shows that the second members 20, 26 of the engaging and disengaging means 15, 16 are part of a single member, more in particular in the form of at least part of a disc, such as for example a full disc or a disc's sector, wherein the guiding paths 22, 28 are applied on opposing sides of the surface of that at least part of the disc. However, such an embodiment is no critical for the invention and also other embodiments are possible for the invention such as for example an embodiment wherein the second member 20, 26 of the engaging and the disengaging means 15, 16 are part of two separate members or for example an embodiment wherein the second member 20, 26 of the engaging and the disengaging means 15, 16 are applied on the same surface of the single member, etc.

It has been found that the guiding paths 22, 28 can be configured to allow a soft engagement and disengagement phase with less angular acceleration.

The first members 19, 25 shown in figure 2 are in the form of a follower, in the form of the roller 21, 27 placed at a radial distance from the respective first or second axis 2, 3. Although the first members 19, 25 thereto comprise a fixed arm radially extending from the respective axes 2, 3, this is not critical for the invention and the follower can for example also be provided on a radially extending member which is provided for allowing the follower to radially move.

Figure 2 further shows that the fixing means 17 comprise a guiding member 31 mounted to the second shaft 3 and provided to rotate together with the second shaft 3. The guiding member 31 has a partial circular inner surface for guiding a fixing member 32 radially extending from the first shaft 2. The fixing member 32 is provided to rotate together with the first shaft 2 inside, and as shown in figure 2 preferably along, the partial circular inner surface to keep the second gear 5 in the disengaged angular position 12. The guiding and the fixing member 31, 32 are moveably mounted with respect to each other along the respective shafts to which they are mounted between an engaging position 33 in which the guiding 31 and the fixing 32 member engage each other and a disengaging position 34 in which the guiding and the fixing member 31, 32 do not engage each other. As figure 2 shows a single revolution clutch according to the present invention in its driving phase, the guiding and the fixing member 31, 32 do not engage each other.

Figure 2 shows that the fixing means 17 comprise several fixing members 32, in particular six fixing members 32 extending from the first shaft 2. The number of fixing members 32 however is not critical for the invention and more or less than six fixing members 32 can be provided to the first shaft 2. Preferably, the number of fixing members 32 and the arc of the particial circular inner surface are provided such that at least two fixing members 32 remain in contact with the partial circular inner surface of the guiding member 31 in the fixing phase, such that the guiding member 31 and thus also the second shaft are prevented from rotating, keeping the second gear 5 in the disengaged angular position 12 in the fixing phase.

The fixing members 32 preferably are symmetrically positioned around the first shaft 2, as shown for example in figure 2. Therefore, if six fixing members 32 are present, the fixing members 32 are arranged hexagonally around the first shaft 2. However, other configurations are possible such as for example a triangular configuration, a square configuration, a pentagonal configuration, a heptagonic configuration, an octagonic configuration, etc.

The arc of the partial circular inner surface is defined by the central angle subtending the arc which preferably substantially equals twice the angle obtained by dividing 260° by the number of fixing members 32 symmetrically positioned around the first shaft 2, in case of the hexagonal for example equaling 120°, as it has been found that such an arc substantially remains in contact with at least two fixing members 32 when in the fixing phase.

It has been found by the inventor that the central angle subtending the arc of the partial circular inner surface preferably is an optimum between a large central angle offering an easier interlocking of the fixing members 32 with the guiding member 31 and a small central angle offering a larger angular distance between the fixing members 32 and thus a better fixation of the second shaft 3. It has been found that such an optimum is obtained with six fixing members 32 and thus a central angle of substantially 120°, as shown in figure 2.

Moreover, preferably the first shaft 2 needs to rotate over the angle between two subsequent fixing members 32 for rotating the second gear 5 from the disengaged angular position 12 to the engaged angular position 13 and for rotating the second gear 5 from the release angular position 18 to the disengaged angular position 12. Therefore, the first shaft 2 needs to rotate 360° + the angle between two subsequent fixing members 32 for a full rotation of the second shaft 3, leading to decreased angular accelerations. Preferably, as can be seen in figure 2, the guiding paths 22, 28 are adapted to provide such a rotation of the second shaft 3 by correspondingly guiding the first members 19, 25.

The second angular part 7 preferably, as is shown in figure 2, substantially corresponds to the angle in between two subsequent fixing members 32. In such an embodiment the central angle of the second angular part 7 is substantially equal to the angle between two subsequent fixing members 32, being 60° and therefore the second gear 5 needs to rotate over an angle of 30° from the disengaged angular position towards the first or the second delimiting tooth 9, 10 whereas the guiding paths 22, 28 are provided such that such a rotation of the second shaft 3 corresponds to a rotation of 60° of the first shaft 2, indeed allowing a decreased angular acceleration of the second gear 5 and, correspondingly, the second shaft 3 while keeping the angular velocity of the first shaft substantially constant.

The fixing members 32 shown in figure 2 are in the form of a follower, in the form of a roller placed at a fixed radial distance from the first axis shaft. Although the fixing members 32 thereto comprise a fixed arm radially extending from the first shaft 2, this is not critical for the invention and the follower can for example also be provided on a radially extending member which is provided for allowing the follower to radially move.

In the single revolution clutch 1 shown in figure 2, the timing means 14 comprises, although not essential for the invention, a cam shaft 35 provided to be driven by the rotation of the first shaft 2. The cam shaft 35 comprises at least a first and a second cam 37, 38 and a cam follower 36 provided to follow the circumference of the cams 37, 38 during rotation of the cams 37, 38 by rotation of the cam shaft 35. The cams 37, 38 of the cam shaft 35 are movably mounted with respect to the cam follower 36 between a first position 39 and a second position 40, such that the cam follower 36 follows the circumference of the first cam 37 in the first position 39 and the circumference of the second cam 38 in the second position 40. The cam follower 36 in the first position 39 controlling the fixing 17, engaging 15 and disengaging 16 means such that a single revolution of the second gear 5 is obtained and the cam follower 36 in the second position 40 controlling the fixing means 17 such that the second gear 5 is kept in the disengaged angular position 12.

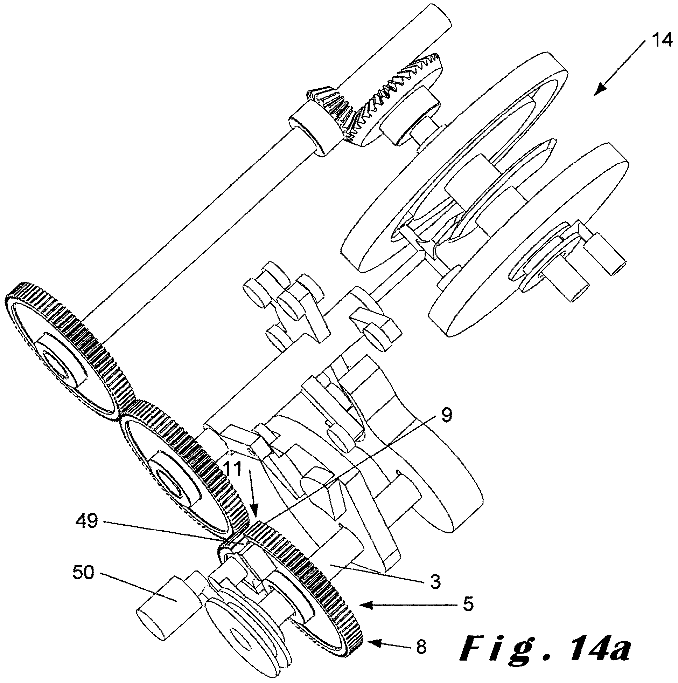

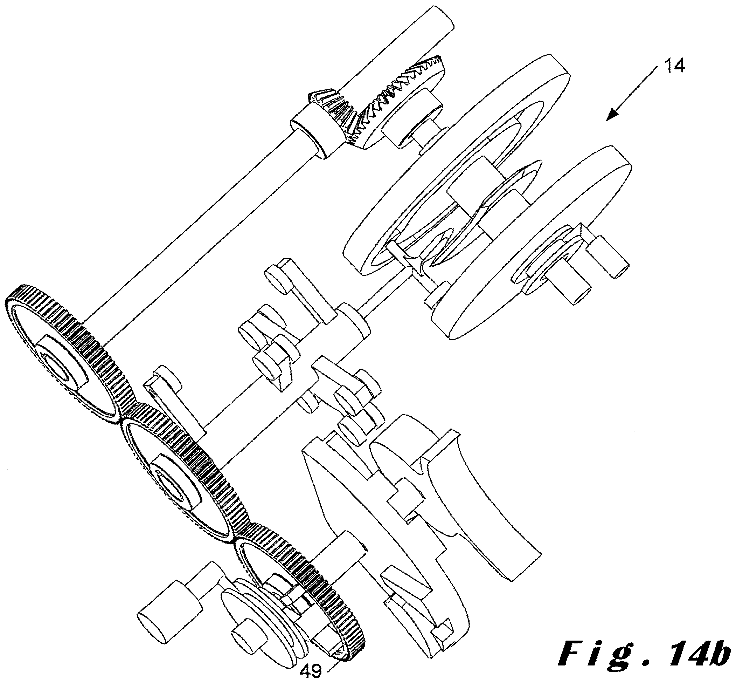

Such timing means 14 are however not critical for the invention and the timing means 14 can also for example comprise a system comprising knives as shown in figure 14a or 14b which shows a similar single revolution clutch 1 as shown in figure 2.

In the single revolution clutch as shown in figure 2 preferably the cam follower 36 is slideably mounted to the first shaft 2, but can also be connected to the second shaft 3, along longitudinal direction of the shaft 2. The sliding motion of the cam follower 36 is driven by following the circumference of the cams 37, 38 by the cam follower 36. The members of the fixing 17, engaging 15 and the disengaging 16 means extending from the shaft to which the cam follower 36 is mounted from distinct extending
positions along longitudinal direction of the shaft, are connected to the cam follower 36. The members of the fixing 17, engaging 15 and the disengaging 16 means extending from the shaft to which the cam follower 36 is mounted and the first cam 37 are configured such that, the cam follower 36 and the cam shaft 35 being in the first position 39 with respect to each other:
- the engagement phase comprises the cam follower 36 being slid by the circumference of the first cam 37 to a first position 41 in which the guiding 31 and the fixing 32 member of the fixing means 17 are in the disengaging position 34 and the first and the second member 19, 20 of the engaging means 15 are in the engaging position 23,
- the first cam 37 being further configured such that the disengagement phase comprises the cam follower 36 subsequently sliding to a second position 42 in which the first and the second member 25, 26 of the disengaging means 16 are in the engaging position 29 and in which the guiding and the fixing member 31, 32 of the fixing means 17 are in the disengaging position 34,
- the first cam 37 being further configured such that the fixing phase comprises the cam follower 36 subsequently sliding to a third position 43 in which the fixing means 17 are in the engaging position 33 and in which the members of the engaging and disengaging means 15, 16 are in the disengaging position,
- the cam shaft 35 and the cam follower 36 being provided to subsequently move to the second position 42 with respect to each other.

As further shown in figure 2, the rotation of the cam shaft 35 preferably but not necessarily is driven by a drive shaft 44. The drive shaft 44 preferably but not necessarily also drives the rotation of the first shaft 2 such that the cam shaft and the first shaft 2 rotate synchronously. As shown in figure 2 this driving by the drive shaft 44 is preferably done using gears, a first set of gears transferring the rotation of the drive shaft 44 to the cam shaft 35 and a second set of gears transferring the rotation of the drive shaft 44 to the first shaft 2. Such a configuration is however not critical for the invention and the first shaft 2 can for example also be directly driven by a drive system without a further gear, while the rotation of the cam shaft 35 is, for example, driven by, for example, a further set of gears transferring the motion of the first shaft 2 to the cam shaft 35.

Figure 14a and figure 14b show an embodiment of the single revolution clutch 1 according to the present invention wherein the single revolution clutch 1 comprises a toothed element 49 which is provided for filling the opening 11 between the first and the second delimiting tooth 9, 10 such as to provide teeth 8 along the entire circumference of the second gear 5 when it is for example desired to drive the second gear 5 into a plurality of complete revolutions by the interlocking teeth of the first and the second gear 4, 5 and/or at a substantially constant speed determined by the rotational speed of the first gear 4. The toothed element 49 preferably is placed in between the first and the second delimiting tooth 9, 10 for filling the opening 11 and to provide teeth 8 along the entire circumference of the second gear 5, when the first and the second gear 4, 5 are in the interlocking position, after completion of the engaging phase such as to prevent a sudden interlock of the first and the second gear 4, 5 when placing the toothed element 49 in between the first and the second delimiting tooth 9, 10 when the first and the second gear 4, 5 in the disengaged position with respect to each other. Preferably, an actuator 50, as shown in figure 14a and 14b, is provided for moving the toothed element in between the first and the second tooth 9, 10 thereto is provided to receive a signal to indicate that the first and the second gear 4, 5 are in the engaged angular position 13. Preferably this signal is provided by the timing means 14.

As shown in figure 14a the toothed element 49 is preferably provided to be placed in the opening 11 between the first and the second delimiting tooth 9, 10 by translating it along the axis of rotation, preferably the second drive shaft 3, of the second gear 5, preferably by the actuator 50. More preferably, the toothed element 49 thereto is provided to slide along the second drive shaft 3 and rotates together with the second gear 5.

The actuator 50 preferably is a hydraulic, pneumatic or electric actuator. This is however not critical for the invention and the actuator can also be any other type of actuator deemed appropriate by the person skilled in the art such as for example a linear actuator, an actuator using links, etc.

Figure 14a shows that the toothed piece 49 is positioned such that the second gear 5 will perform a single revolution when so desired. Figure 14b shows that the toothed piece 49 is placed in the opening 11 such that the second drive axis is rotationally driven by rotation of the first gear 4 as long as desired. The driving of the second drive axis 3 into a plurality of complete revolutions is terminated by removing the toothed piece 49 from the opening 11 and executing the required steps for the disengagement phase.

When placing the toothed piece 49 in the opening 11 during the driving phase, preferably the timing means 14 control the disengaging means 16 such that the first and the second member 25, 26 of the disengaging means 16 will not engage each other as compared to when no toothed piece 49 where to be present in the opening 11, such as not to disturb the movement of the first and the second gear 4, 5. Vice versa, when removing the toothed piece 49 from the opening 11 during the driving phase, preferably the timing means 14 control the disengaging means 16 such that the first and the second member 25, 26 of the disengaging means 16 will engage each other during a disengagement phase as compared to when the toothed piece 49 where not to be present in the opening 11, such as to bring the second gear to the disengaged angular position 12, similar to the end of a single revolution cycle.

The invention also relates to the use of a single revolution clutch 1 according to the invention or a drive system according to the invention or a square baler according to the invention. In such a use the timing means 14 control the engaging 15, disengaging 16 and fixing means 17 such that a single revolution of the second gear 5 is obtained by:
- an engagement phase, wherein the timing means 14 control the engaging means 15 such that the second gear 5 is rotated from the disengaged angular position 12 to the engaged angular position 13,
- a subsequent driving phase in which the first gear 4 interlockingly drives the second gear 5 from the engaged angular position 13 to the release angular position 18,
- a subsequent disengagement phase wherein the timing means 14 control the disengaging means such that the second gear 5 is rotated from the release angular position 18 to the disengaged angular position 12 and
- a subsequent fixing phase wherein the timing means 14 control the fixing means 17 such that the second gear 5 is kept in the disengaged angular position 12.

The subsequent steps of the use of the single revolution clutch 1 are for example shown in:

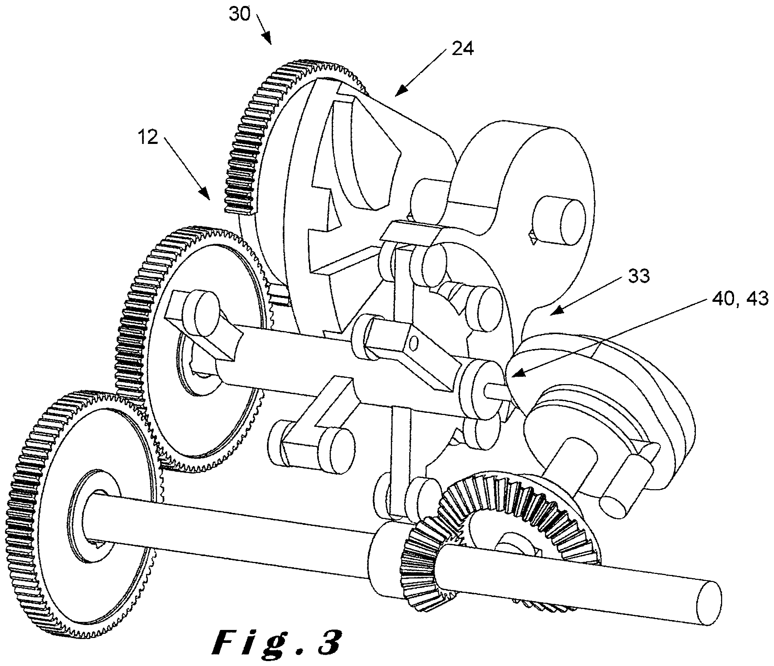

- Figure 3: showing the single revolution clutch 1 according to figure 2 in the fixing phase, where the engaging means 15 and the disengaging means 16 are in the disengaging position 24, 30 and the fixing means 17 are in the engaging position 33, with the cam shaft 35 being in the second position with respect to the cam follower 36 or the cam follower being in the third position 43,

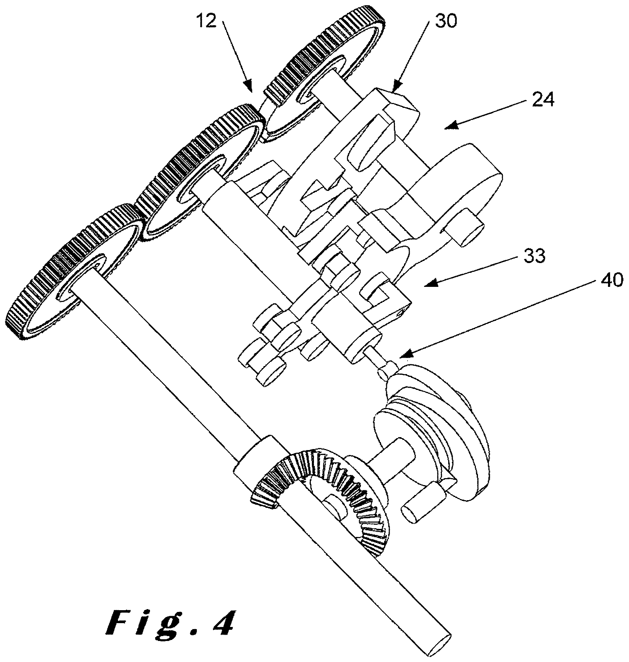

- Figure 4: showing the single revolution clutch 1 according to figure 2 in the fixing phase, where the engaging means 15 and the disengaging means 16 are in the disengaging position 24, 30 and the fixing means 17 are in the engaging position 33, with the cam shaft 35 being in the second position 40 with respect to the cam follower 36,

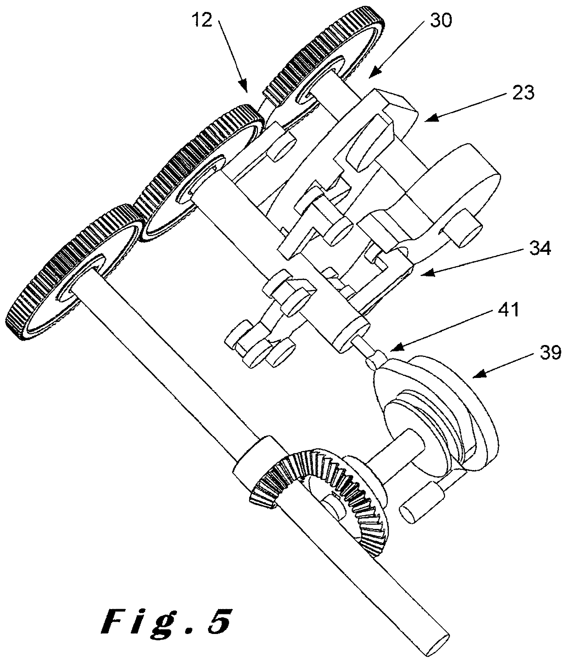

- Figure 5: showing the single revolution clutch 1 according to figure 2 in the engagement phase, where the engaging means 15 are in the engaging position 23, the disengaging means 16 are in the disengaging position 30 and the fixing means 17 are in the disengaging position 34, with the cam shaft 35 being in the first position 39 with respect to the cam follower 36 and the cam follower 36 being in the first position 41,

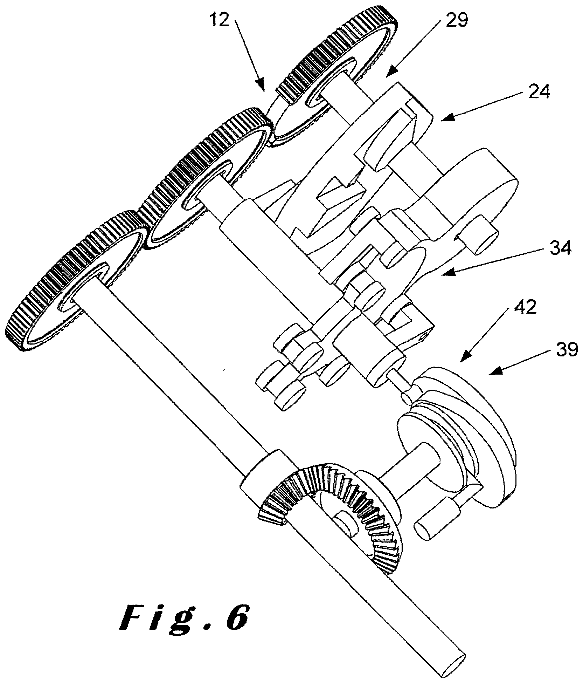

- Figure 6: showing the single revolution clutch 1 according to figure 2 in the disengagement phase, where the engaging means 15 are in the disengaging position 24, the disengaging means 16 are in the engaging position 29 and the fixing means 17 are in the disengaging position 34, with the cam shaft 35 being in the first position 39 with respect to the cam follower 36 and the cam follower 36 being in the second position 42.

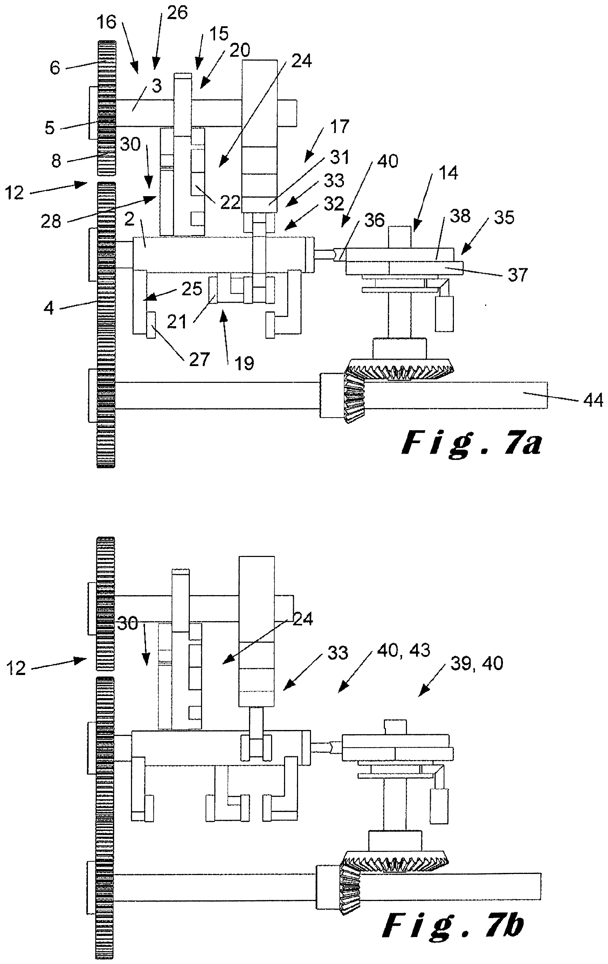

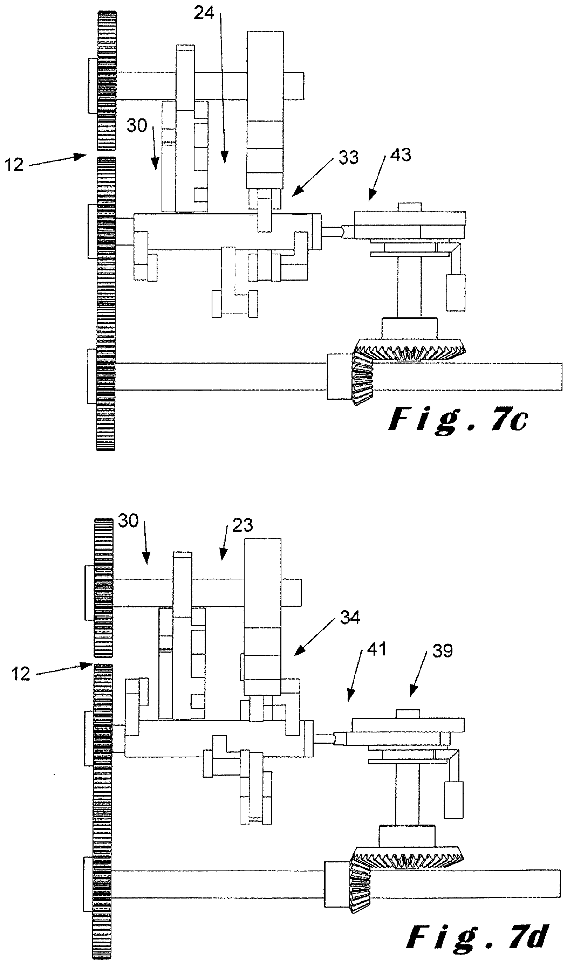

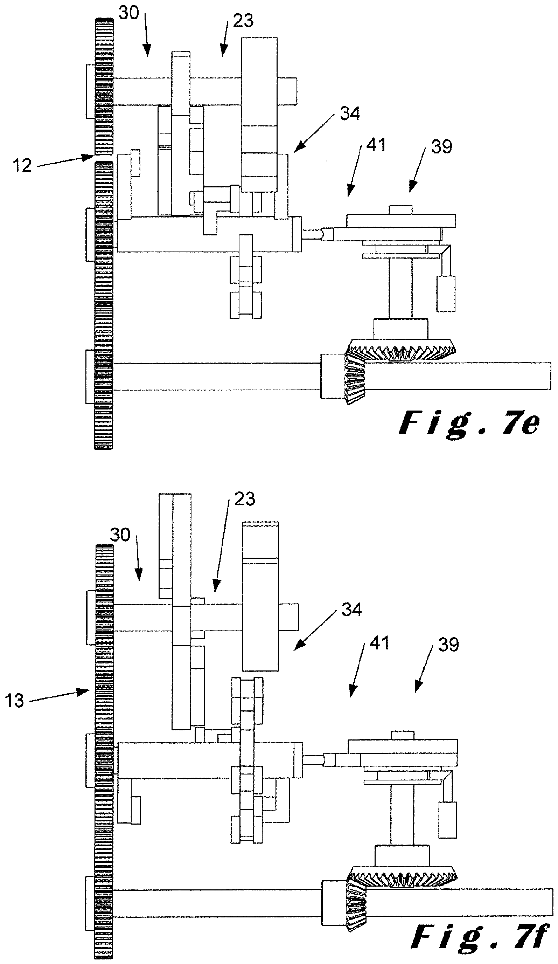

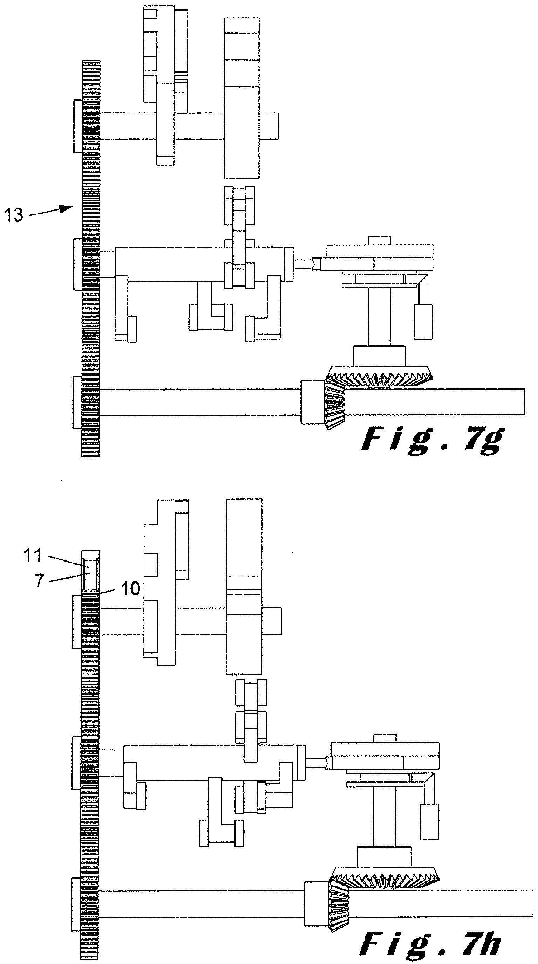

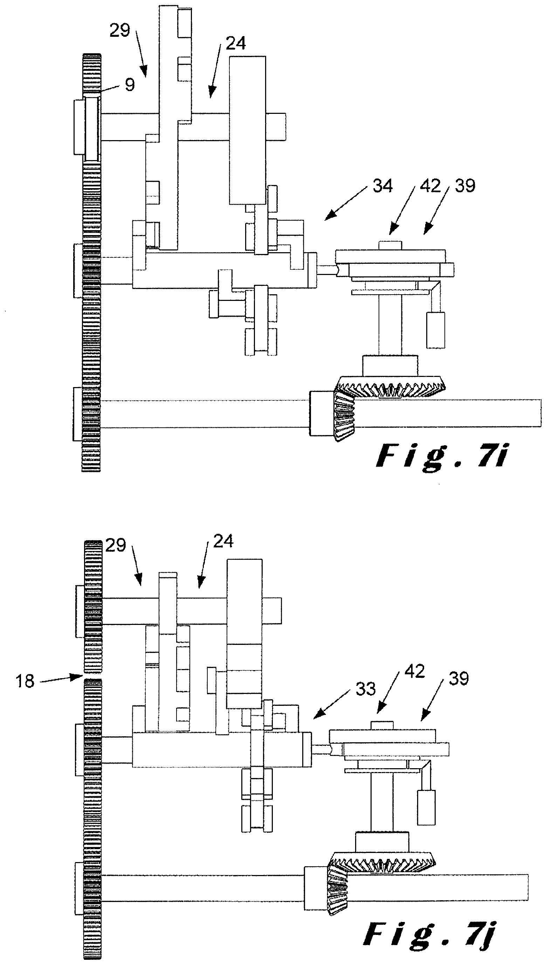

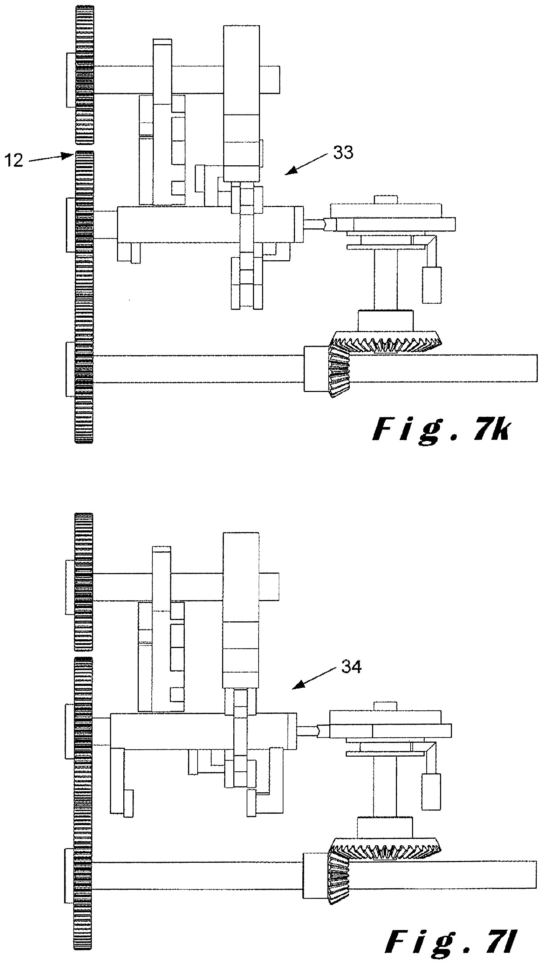

Figures 7a - 7l show the different steps of the cyclic use of the single revolution clutch 1 shown in figure 2. It can be seen that after figure 7l the single revolution clutch 1 is returned to the state as depicted in figure 7a such that the second gear 5 is ready once again to perform a single revolution when desired by shifting the cam shaft 35 and the cam follower 36 with respect to each other such that they are again in the first position 39 with respect to each other as shown in figures 7b, 7c. Figures 7d - 7f show the steps leading to the engagement phase. Figures 7g - 7i show the driving phase and the steps leading to the disengagement phase 7k - 71 show the fixing phase and the disengagement phase.

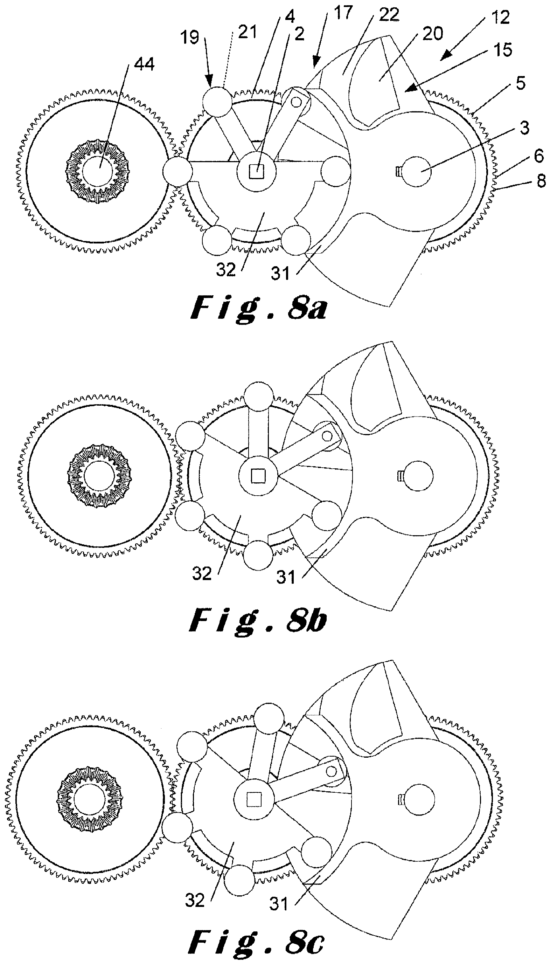

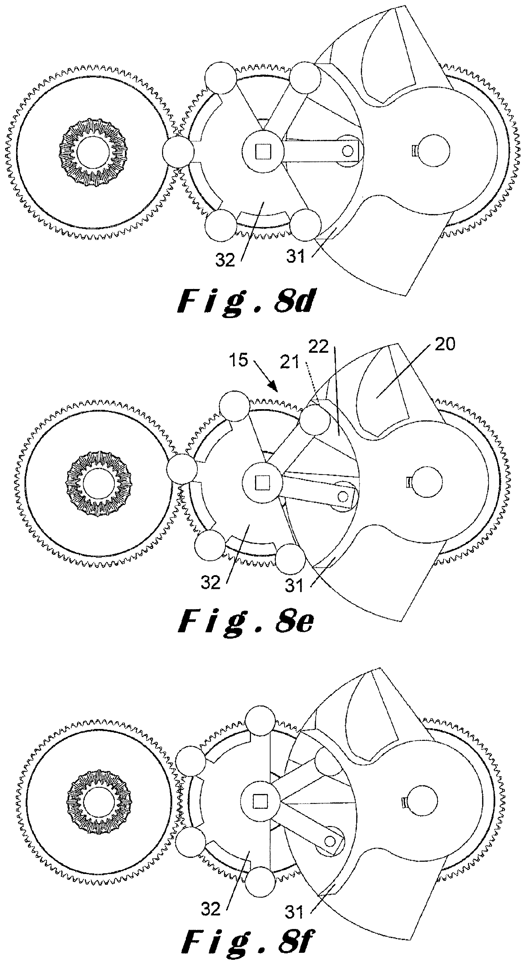

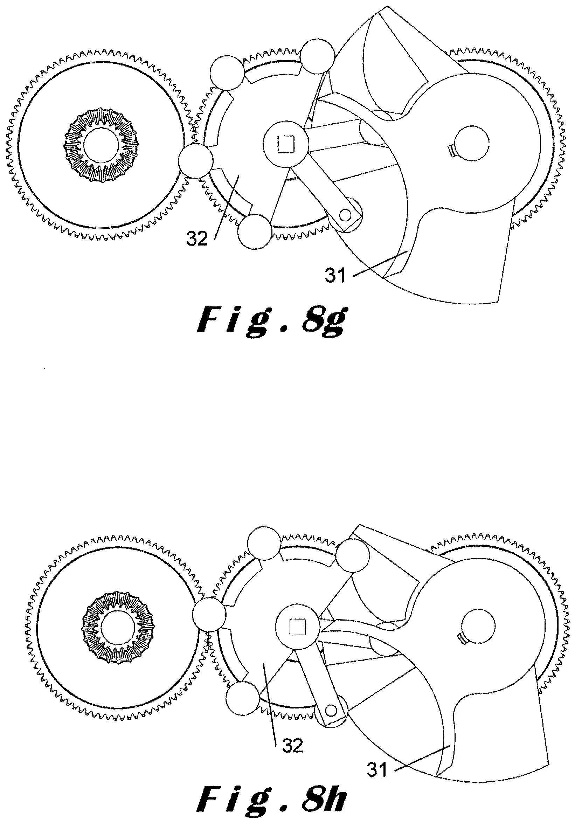

Figures 8a - 8d show a side view of the single revolution clutch 1 according to the invention shown in figure 2 as if one would look along the drive shaft 44 towards the gears of the single revolution clutch 1. Figure 8a - 8d show the single revolution clutch in the fixing phase, just before the engagement phase. It can be observed that the fixing means 17 keep the first gear 4 into its place with respect to the second gear 5, although the first and the second gear 4, 5 are in the disengaged angular position 12 with respect to each other.
Figure 8e - 8h show a side view of the single revolution clutch 1 according to the invention shown in figure 2 as if one would look along the drive shaft 44 towards the gears of the single revolution clutch 1 in the engagement phase. Figure 8e shows that the engaging roller 21 of the engaging means 15 engages in the guiding path 22 of the second member 20, as shown in a top view in figure 7e. Figures 8f - 8h show the further movement of the engaging roller 21 in the guiding path 22 and especially the movement of the guiding member 31 of the fixing means 17.

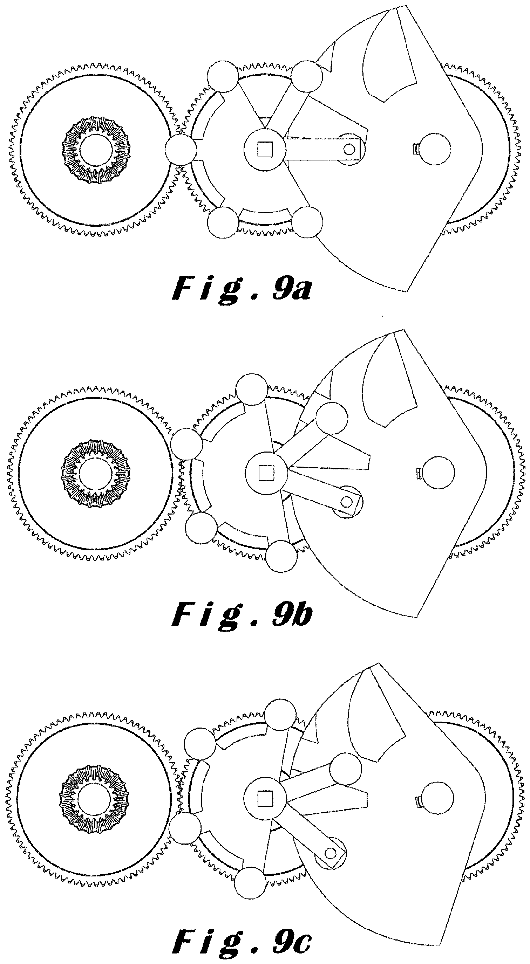

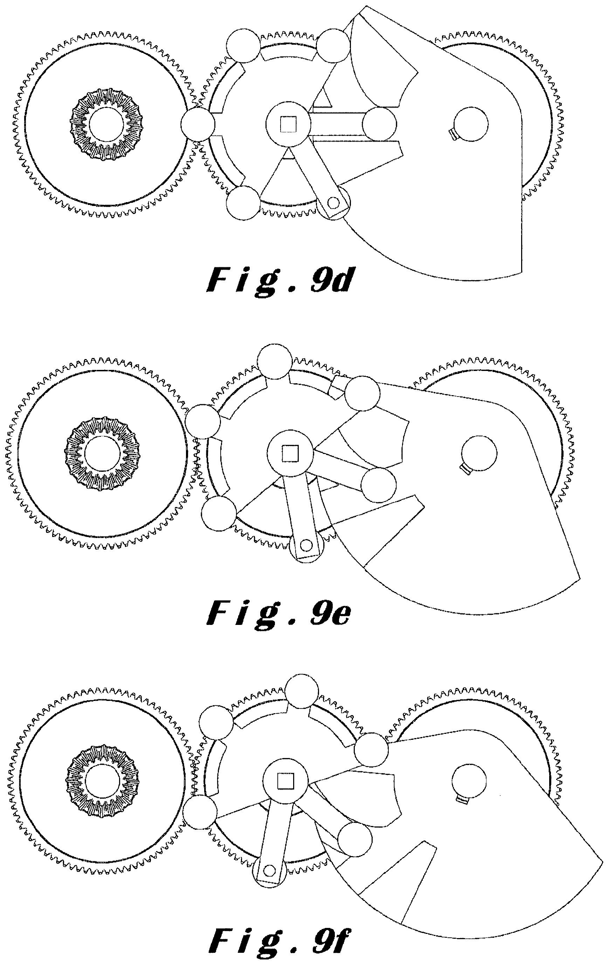

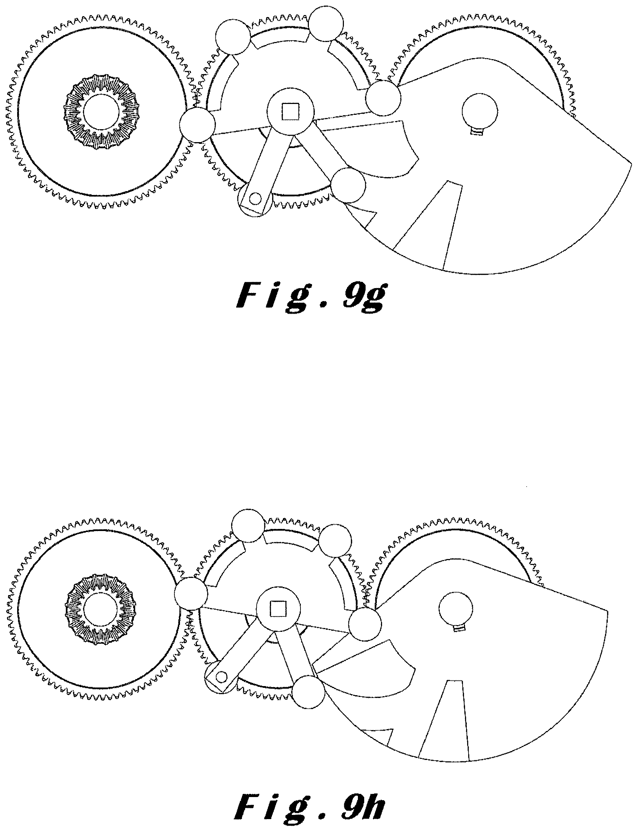

Figure 9a shows the view according to 8d but without the guiding member 31 of the fixing means 17, to further clarify the engagement of the first and the second member 19, 20 of the engaging means 15 during the engagement phase. The continuation of the engagement phase shown in figure 9a is shown in figures 9b - 9h. It can be seen in figure 9h, that the teeth of the first and second gear 4, 5 now interlock and that therefore the second gear 5 is driven by the first gear 4 through their respective teeth.

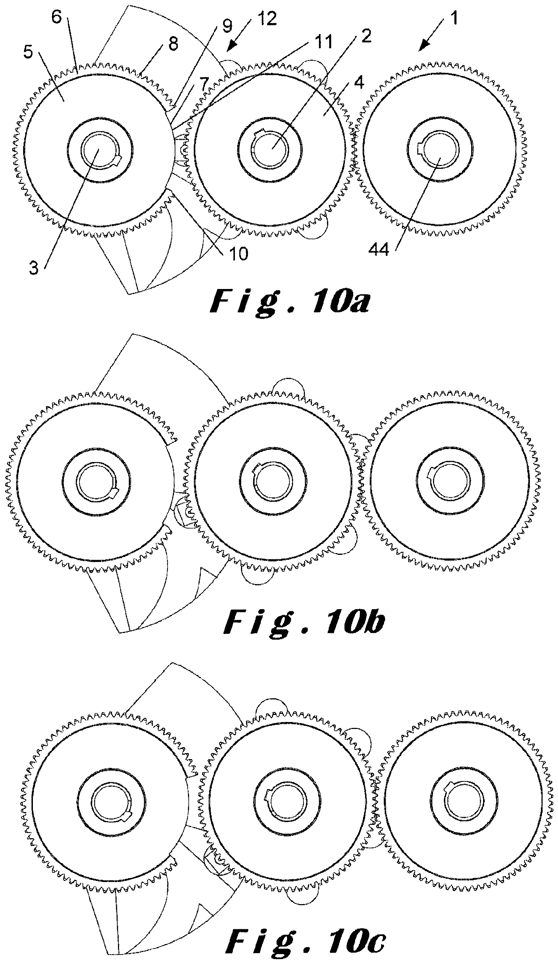

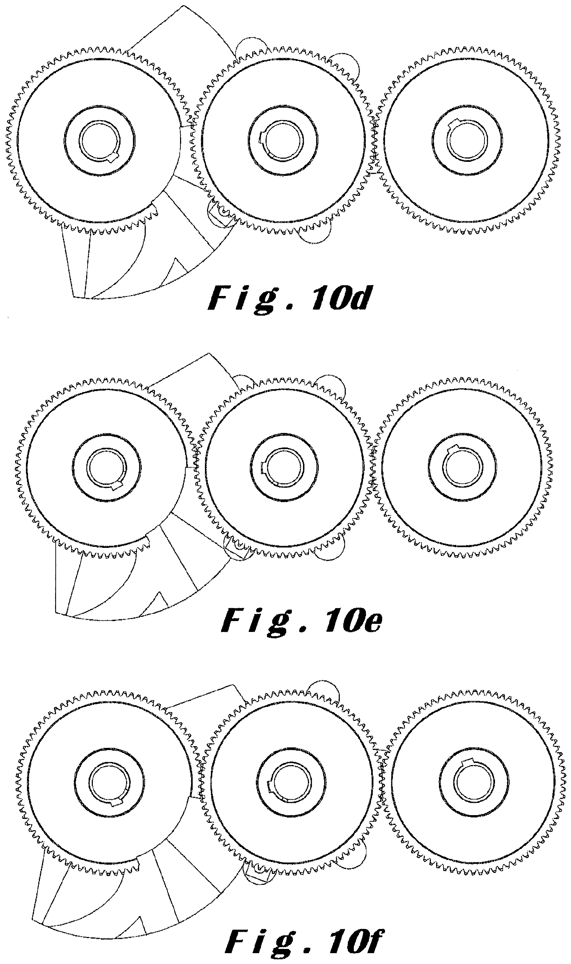

Figures 10a - 10f show the engagement phase from the disengaged angular position 12 to the engaged angular position 13 but from a side view opposing the side view of figures 9a - 9h.

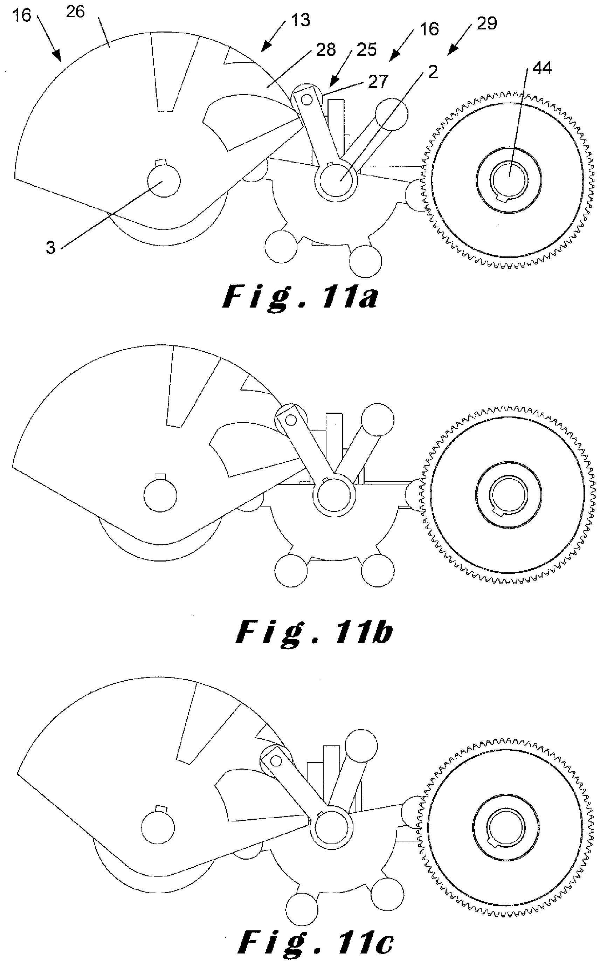

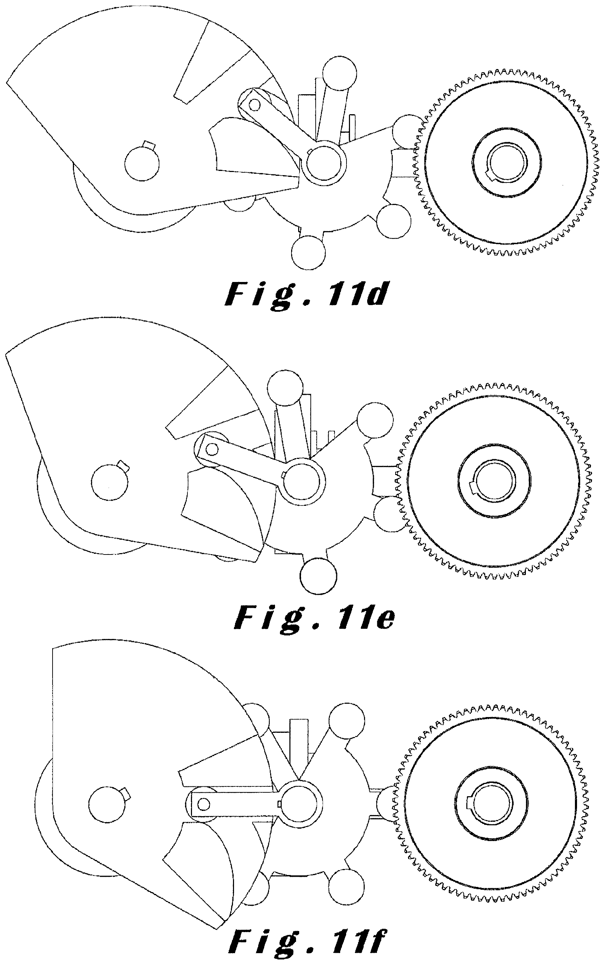

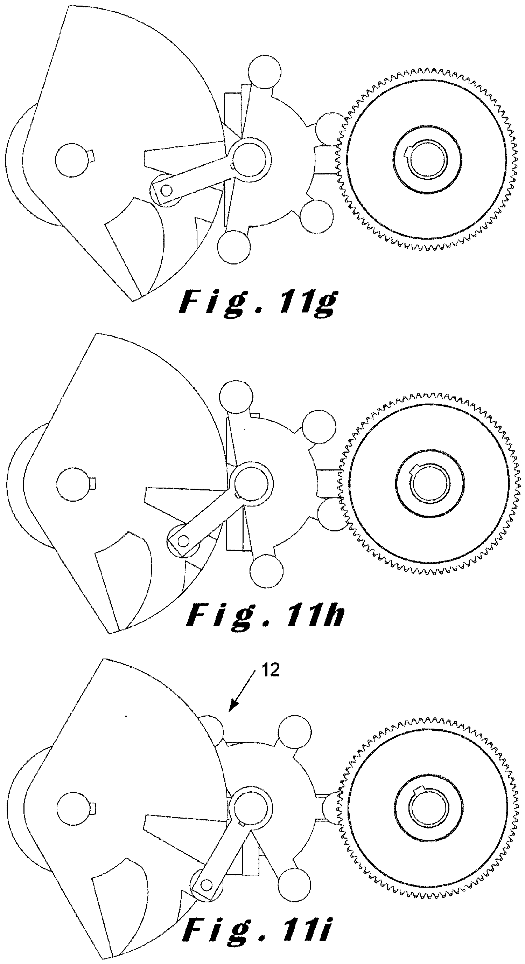

Figures 11a - 11i show the disengagement phase from the engaged angular position 13 to the disengaged angular position 12 along the same view as shown in figures 10a - 10f but with the first 4 and the second 5 gear removed such as to offer an improved view of the disengaging means 16.

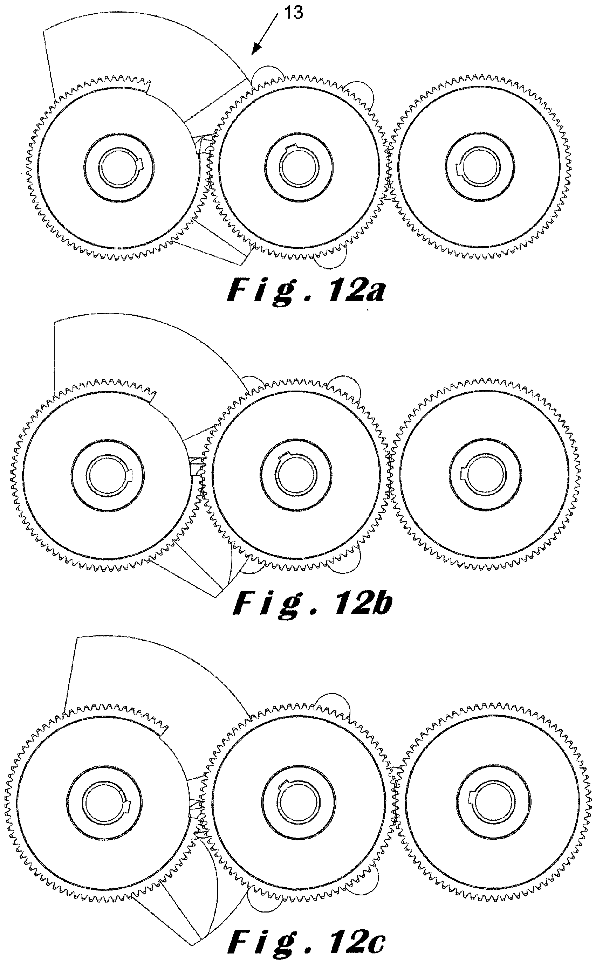

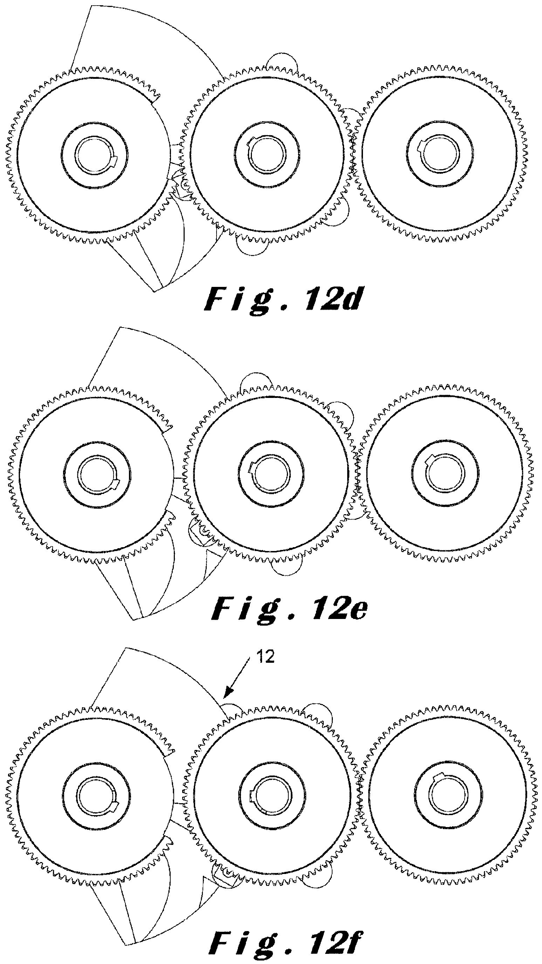

Figures 12a - 12f show the disengagement phase from the engaged angular position 13 to the disengaged angular position 12 along the same view as shown in figures 10a - 10f but now with the first 4 and the second 5 gear such as to offer an improved view of the movement of the first and the second gear 4, 5 with respect to each other during the disengagement phase.

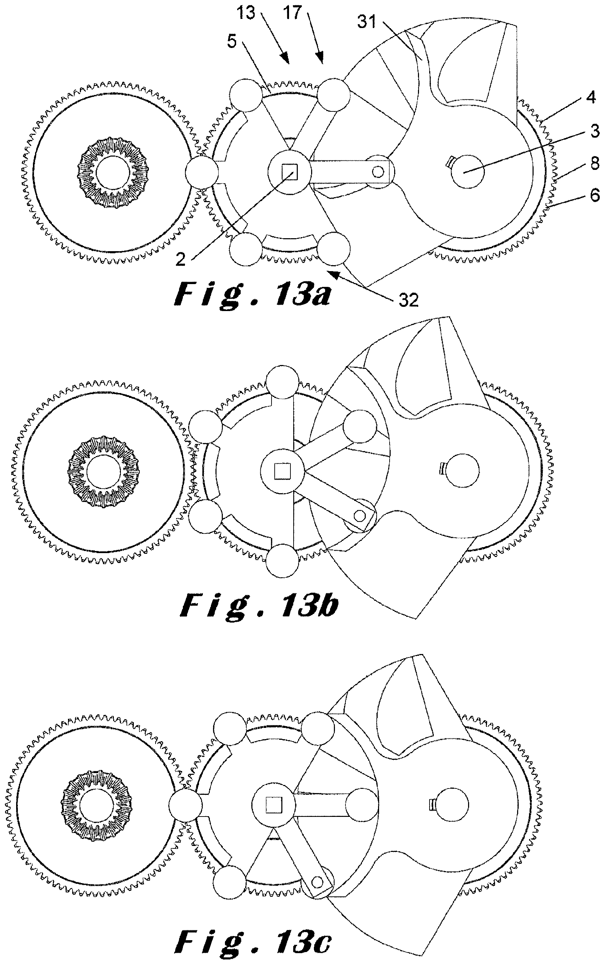

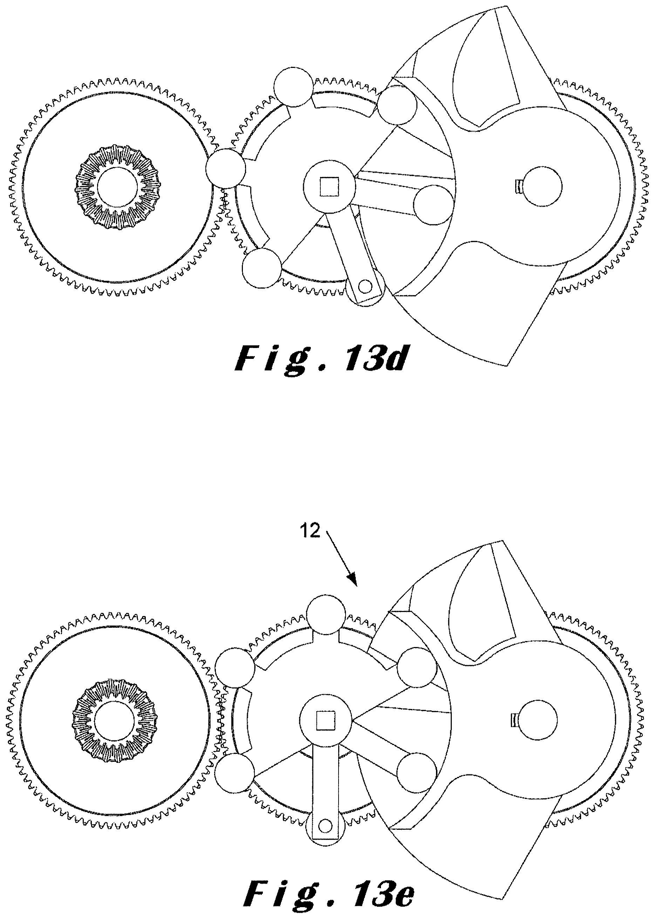

Figures 13a - 13e show the movement of the fixing means 17 during the disengagement phase in a view opposing the view of figures 12a - 12f, such as to show that after completion of the disengagement phase, the fixing means 17 now keep the second gear 5 in the desired disengaged angular position 12 in the fixing phase as the guiding member 31 and the fixing member 32 of the fixing means 17 engage each other.

## Claims

1. Single revolution clutch (1) for mechanically interconnecting a first drive shaft (2), provided to be substantially continuously rotated, to a second shaft (3) such that the second shaft (3) can be driven by the first shaft (2) into a single revolution, the clutch (1) comprising a first gear (4) to be connected to the first shaft (2), the clutch (1) comprises a second gear (5) to be connected to the second shaft (3), in that a first angular part (6) of the circumference of the second gear (5) is provided with teeth (8) delimited by a first and a second delimiting tooth (9, 10) and a second angular part (7) of the circumference of the second gear (5) between the first and the second delimiting teeth (9, 10) forms an opening (11), in that the first gear (4) is provided for drivingly interlocking with the second gear (5) over the first angular part (6) of the second gear (5) and is provided to disengage the second gear (5) at the second angular part (7) of the second gear (5), the opening (11) receiving the teeth (8) of the first gear (4) at a disengaged angular position (12) of the second gear (5), in that the single revolution clutch (1) comprises fixing means (17) for keeping the second gear (5) in the disengaged angular position (12), engaging means (15) for rotating the second gear (5) from the disengaged angular position (12) to an engaged angular position (13) wherein the first gear (4) drivingly interlocks with the first delimiting tooth (9) of the second gear (5) and disengaging means (16) for rotating the second gear (5) from a release angular position (18) wherein the first gear (4) drivingly interlocks with the second delimiting tooth (10) of the second gear (5) towards the disengaged angular position (12) after having rotated interlockingly driven by the first gear (4) and in that the single revolution clutch (1) comprises timing means (14) for controlling the engaging (15), disengaging (16) and fixing means (17) such that a single revolution of the second gear (5) is obtained by:
- an engagement phase, wherein the timing means (14) control the engaging means (15) such that the second gear (5) is rotated from the disengaged angular position (12) to the engaged angular position (13),
- a subsequent driving phase in which the first gear (4) interlockingly drives the second gear (5) from the engaged angular position (13) to the release angular position (18),
- a subsequent disengagement phase wherein the timing means (14) control the disengaging means (16) such that the second gear (5) is rotated from the release angular position (18) to the disengaged angular position (12) and
- a subsequent fixing phase wherein the timing means (14) control the fixing means (17) such that the second gear (5) is kept in the disengaged angular position (12)
**characterized in that** the engaging means (15) comprise a first member (19) radially extending from either the first (2) or the second shaft (3) and a second member (20) extending from the other of the first (2) and the second shaft (3), the first and the second member (19, 20) being provided to rotate together with the shaft (2, 3) from which they extend, the first member (19) comprising an engaging roller (21) at its end, the second member (20) comprising a guiding path (22) for receiving the engaging roller (21) such that the rotating motion of the first shaft (2) is transferred to the second shaft (3) upon engagement of the first and the second member (19, 20), rotating the second gear (5) from the disengaged angular position (12) to the engaged angular position (13) wherein the first gear (4) drivingly interlocks with the first delimiting tooth (9) of the second gear (5), the first and the second member (19, 20) being moveably mounted with respect to each other along the respective shafts (2, 3) to which they are mounted between an engaging position (23) in which the first and the second member (19, 20) engage each other and a disengaging position (24) in which the first and the second member (19, 20) do not engage each other.

2. A single revolution clutch (1) according to claim 1, **characterized in that** the first member (19) extends from the first shaft (2) and the second member (20) extends from the second shaft (3).

3. A single revolution clutch (1) according to any one of claims 1 or 2, **characterized in that** the disengaging means (16) comprise a first member (25) radially extending from either the first (2) or the second shaft (3) and a second member (26) extending from the other shaft, the first and the second member (25, 26) being provided to rotate together with the shaft from which they extend, the first member (25) comprising a disengaging roller (27) at its end, the second member (26) comprising a guiding path (28) for receiving the disengaging roller (27) such that the rotating motion of the first shaft (2) is transferred to the second shaft (3) upon engagement of the first and the second member (25, 26), rotating the second gear (5) towards the disengaged angular position (12) after having reached the second delimiting tooth (10) after having rotated driven by the first gear (4), the first and the second member (25, 26) being moveably mounted with respect to each other along the respective shafts to which they are mounted between an engaging position (29) in which the first and the second member (25, 26) engage each other and a disengaging position (30) in which the first and the second member (25, 26) do not engage each other.

4. A single revolution clutch (1) according to claim 3, **characterized in that** the first member (25) extends from the first shaft (2) and the second member (26) extends from the second shaft (3).

5. A single revolution clutch (1) according to any one of claims 1 - 4, **characterized in that** the fixing means (17) comprise a guiding member (31) mounted to the second shaft (3) and provided to rotate together with the second shaft (3) and having a partial circular inner surface for guiding a fixing member (32) radially extending from the first shaft (2) provided to rotate together with the first shaft (2) inside the partial circular inner surface to keep the second gear (5) in the disengaged angular position (12), the guiding and the fixing member (31, 32) being moveably mounted with respect to each other along the respective shafts to which they are mounted between an engaging position (33) in which the guiding and the fixing member engage each other and a disengaging position (34) in which the guiding and the fixing member (31, 32) do not engage each other.

6. A single revolution clutch (1) according to any one of claims 1 - 5, **characterized in that** the timing means (14) comprises a cam shaft (35) provided to be driven by the rotation of the first shaft (2), the cam shaft (35) comprising at least a first and a second cam (37, 38) and a cam follower (36) provided to follow the circumference of the cams (37, 38) during rotation of the cams (37, 38) by rotation of the cam shaft (35), the cams (37, 38) of the cam shaft (35) being movably mounted with respect to the cam follower (36) between a first position (39) and a second position (40), such that the cam follower (36) follows the circumference of the first cam (37) in the first position (39) and the circumference of the second cam (38) in the second position (40), the cam follower (36) in the first position (39) controlling the fixing (17), engaging (15) and disengaging (16) means such that a single revolution of the second gear (5) is obtained and the cam follower (36) in the second position (40) controlling the fixing means (17) such that the second gear (5) is kept in the disengaged angular position (12).

7. A single revolution clutch (1) as claimed in claim 6 at least in combination with claims 1, 3 and 5, **characterized in that** the cam follower (36) is slideably mounted to the first (2) or the second shaft (3) along longitudinal direction of the shaft, the sliding motion of the cam follower (36) being driven by following the circumference of the cams (37, 38) by the cam follower (37), and **in that** the members of the fixing (17), engaging (15) and the disengaging (16) means extending from the shaft to which the cam follower (36) is mounted from distinct extending positions along longitudinal direction of the shaft, are connected to the cam follower (36), the members of the fixing (17), engaging (15) and the disengaging (16) means extending from the shaft to which the cam follower (36) is mounted and the first cam (37) being configured such that, the cam follower (36) and the cam shaft (35) being in the first position (39) with respect to each other, the engagement phase comprises the cam follower (36) being slid by the circumference of the first cam (37) to a first position (41) in which the guiding (31) and the fixing (32) member of the fixing means (17) are in the disengaging position (34) and the first and the second member (19, 20) of the engaging means (15) are in the engaging position (23), the first cam (37) being further configured such that the disengagement phase comprises the cam follower (36) subsequently sliding to a second position (42) in which the first and the second member (25, 26) of the disengaging means (16) are in the engaging position (29) and in which the guiding and the fixing member (31, 32) of the fixing means (17) are in the disengaging position (34), the first cam (37) being further configured such that the fixing phase comprises the cam follower (36) subsequently sliding to a third position (43) in which the fixing means (17) are in the engaging position (33) and in which the members of the engaging and disengaging means (15, 16) are in the disengaging position, the cam shaft (35) and the cam follower (36) being provided to subsequently move to the second position (42) with respect to each other.

8. A single revolution clutch (1) as claimed in claim 6 or 7, **characterized in that** the cam follower (36) is slideably mounted to the first shaft (2), the sliding motion of the cam follower (36) being driven by following the circumference of the cams (37, 38) by the cam follower (36).

9. A single revolution clutch (1) as claimed in claim 7 or 8, **characterized in that** the rotation of the cam shaft (35) is driven by a drive shaft (44) and **in that** the drive shaft (44) also drives the rotation of the first shaft (2) such that the cam shaft and the first shaft (2) rotate synchronously.

10. A single revolution clutch (1) as claimed in any one of the preceding claims, **characterized in that** the single revolution clutch (1) comprises a toothed element (49) which is provided for filling the opening (11) between the first and the second delimiting tooth (9, 10) such as to provide teeth (8) along the entire circumference of the second gear (5) such as to be able to, due to the presence of the toothed element (49), drive the second gear (5) into a plurality of complete revolutions.

11. Drive system comprising a single revolution clutch (1) according to any one of claims 1 - 10, wherein a first drive shaft (2) of the drive system provided to be substantially continuously rotated is connected by the single revolution clutch (1) to a second shaft (3) of the drive system such that the second shaft (3) can be driven by the first shaft (2) into a single revolution, the first gear (4) of the clutch (1) being connected to the first shaft (2) and the second gear (5) of the clutch (1) being connected to the second shaft (3).

12. Square baler (45) comprising a drive system as claimed in claim 11, wherein the second shaft (3) of the drive system is connected to a stuffer of the square baler.

13. Use of a single revolution clutch (1) according to any one of claims 1 - 10 or a drive system according to claim 11 or a square baler according to claim 12, **characterized in that** the timing means (14) control the engaging (15), disengaging (16) and fixing means (17) such that a single revolution of the second gear (5) is obtained by:
- an engagement phase, wherein the timing means (14) control the engaging means (15) such that the second gear (5) is rotated from the disengaged angular position (12) to the engaged angular position (13),
- a subsequent driving phase in which the first gear (4) interlockingly drives the second gear (5) from the engaged angular position (13) to the release angular position (18),
- a subsequent disengagement phase wherein the timing means (14) control the disengaging means such that the second gear (5) is rotated from the release angular position (18) to the disengaged angular position (12) and
- a subsequent fixing phase wherein the timing means (14) control the fixing means (17) such that the second gear (5) is kept in the disengaged angular position (12).

## Patentansprüche

1. Eintourenkupplung (1) zum mechanischen Verbinden einer ersten Antriebswelle (2), die dazu vorgesehen ist, im Wesentlichen kontinuierlich gedreht zu werden, mit einer zweiten Welle (3), sodass die zweite Welle (3) durch die erste Welle (2) in einer einzelnen Umdrehung angetrieben wird, wobei die Kupplung (1) ein erstes Zahnrad (4) aufweist, das mit der ersten Welle (2) zu verbinden ist, wobei die Kupplung (1) ein zweites Zahnrad (5) aufweist, das mit der zweiten Welle (3) zu verbinden ist, wobei ein erster Winkelabschnitt (6) des Umfangs des zweiten Zahnrads (5) mit Zähnen (8) versehen ist, die durch einen ersten und einen zweiten Begrenzungszahn (9, 10) begrenzt sind, und wobei ein zweiter Winkelabschnitt (7) des Umfangs des zweiten Zahnrads (5) zwischen den ersten und zweiten Begrenzungszähnen (9, 10) eine Öffnung (11) bildet, wobei das erste Zahnrad (4) zum antriebsmäßigen Ineinandergreifen mit dem zweiten Zahnrad (5) über den ersten Winkelabschnitt (6) des zweiten Zahnrads (5) vorgesehen ist und dazu vorgesehen ist, das zweite Zahnrad (5) in dem zweiten Winkelabschnitt (7) des zweiten Zahnrads (5) auszukuppeln, wobei die Öffnung (11) die Zähne (8) des ersten Zahnrads (4) in einer ausgekuppelten Winkelposition (12) des zweiten Zahnrads (5) aufnimmt, wobei die Eintourenkupplung (1) Feststellmittel (17) zum Halten des zweiten Zahnrads (5) in der ausgekuppelten Winkelposition (12), Einkuppelmittel (15) zum Drehen des zweiten Zahnrads (5) aus der ausgekuppelten Winkelposition (12) zu einer eingekuppelten Winkelposition (13), wobei das erste Zahnrad (4) antriebsmäßig mit dem ersten Begrenzungszahn (9) des zweiten Zahnrads (5) in Eingriff steht, und Auskuppelmittel (16) aufweist zum Drehen des zweiten Zahnrads (5) aus einer Freigabewinkelposition (18), wobei das erste Zahnrad (4) mit dem zweiten Begrenzungszahn (10) des zweiten Zahnrads (5) zu der ausgekuppelten Winkelposition (12) hin antriebsmäßig in Eingriff steht, nachdem es in Eingriff stehend durch das erste Zahnrad (4) gedreht wurde, und wobei die Eintourenkupplung (1) eine Zeitsteuerungseinrichtung (14) zum Steuern der Einkuppelmittel (15), der Auskuppelmittel (16) und der Befestigungsmittel (17) aufweist, sodass eine einzelne Umdrehung des zweiten Zahnrads (5) durch Folgendes erreicht wird:
- eine Einkuppelphase, wobei die Zeitsteuerungseinrichtung (14) die Einkuppelmittel (15) steuert, sodass das zweite Zahnrad (5) von der ausgekuppelten Winkelposition (12) in die eingekuppelte Winkelposition (13) gedreht wird,
- eine darauffolgende Antriebsphase, in der das erste Zahnrad (4) in Eingriff das zweite Zahnrad (5) von der eingekuppelten Winkelposition (13) in die Freigabewinkelposition (18) antreibt,
- eine darauffolgende Auskuppelphase, wobei die Zeitsteuerungseinrichtung (14) die Auskuppelmittel (16) steuern, sodass das zweite Zahnrad (5) von der Freigabewinkelposition (18) in die ausgekuppelte Winkelposition (12) gedreht wird, und
- eine darauffolgende Feststellphase, wobei die Zeitsteuerungseinrichtung (14) die Feststellmittel (17) steuern, sodass das zweite Zahnrad (5) in der ausgekuppelten Winkelposition (12) gehalten wird,
**dadurch gekennzeichnet, dass**
die Einkuppelmittel (15) ein erstes Element (19), das sich radial von entweder der ersten (2) oder der zweiten Welle (3) erstreckt, und ein zweites Element (20) aufweisen, das sich von der anderen der ersten (2) und der zweiten Welle (3) erstreckt, wobei die ersten und zweiten Elemente (19, 20) vorgesehen sind, um sich zusammen mit der Welle (2, 3) zu drehen, von der sie sich erstrecken, wobei das erste Element (19) an seinem Ende eine Eingriffswalze (21) aufweist, wobei das zweite Element (20) eine Führungsbahn (22) zur Aufnahme der Eingriffswalze (21) aufweist, sodass die Drehbewegung der ersten Welle (2) beim Ineinandergreifen der ersten und zweiten Elemente (19, 20) auf die zweite Welle (3) übertragen wird, wobei das zweite Zahnrad (5) aus der ausgekuppelten Winkelposition (12) in die eingekuppelte Winkelposition (13) gedreht wird, wobei das erste Zahnrad (4) antriebsmäßig mit dem ersten Begrenzungszahn (9) des zweiten Zahnrads (5) in Eingriff steht, wobei die ersten und zweiten Elemente (19, 20) zueinander entlang der entsprechenden Wellen (2, 3) beweglich angeordnet sind, an denen sie zwischen einer Einkuppelposition (23), in der die ersten und zweiten Elemente (19, 20) miteinander eingreifen, und einer Auskuppelposition (24) angeordnet sind, in der die ersten und zweiten Elemente (19, 20) nicht miteinander eingreifen.

2. Eintourenkupplung (1) nach Anspruch 1, **dadurch gekennzeichnet, dass** das erste Element (19) sich von der ersten Welle (2) erstreckt, und das zweite Element (20) sich von der zweiten Welle (3) erstreckt.

3. Eintourenkupplung (1) nach einem der Ansprüche 1 oder 2, **dadurch gekennzeichnet, dass** die Auskuppelmittel (16) ein erstes Element (25), das sich radial von entweder der ersten (2) oder der zweiten Welle (3) erstreckt, und ein zweites Element (26) aufweisen, das sich von der anderen Welle erstreckt, wobei die ersten und zweiten Elemente (25, 26) vorgesehen sind, sich zusammen mit der Welle, von der sie sich erstrecken, zu drehen, wobei das erste Element (25) an seinem Ende eine Auskuppelwalze (27) aufweist, wobei das zweite Element (26) eine Führungsbahn (28) zur Aufnahme der Auskuppelwalze (27) aufweist, sodass die Drehbewegung der ersten Welle (2) auf die zweite Welle (3) bei Ineinandergreifen der ersten und zweiten Elemente (25, 26) übertragen wird, wobei sich das zweite Zahnrad (5) auf die ausgekuppelte Winkelposition (12) hin dreht, nachdem es den zweiten Begrenzungszahn (10) erreicht hat, nachdem es angetrieben durch das erste Zahnrad (4) gedreht wurde, wobei die ersten und zweiten Elemente (25, 26) zueinander entlang der entsprechenden Wellen, an denen sie angeordnet sind, zwischen einer Einkuppelposition (29), in der die ersten und zweiten Elemente (25, 26) miteinander in Eingriff stehen, und einer Auskuppelposition (30) beweglich sind, in der die ersten und zweiten Elemente (25, 26) nicht miteinander in Eingriff stehen.

4. Eintourenkupplung (1) nach Anspruch 3, **dadurch gekennzeichnet, dass** das erste Element (25) sich von der ersten Welle (2) erstreckt und dass das zweite Element (26) sich von der zweiten Welle (3) erstreckt.

5. Eintourenkupplung (1) nach einem der Ansprüche 1 bis 4, **dadurch gekennzeichnet, dass** die Feststellmittel (17) ein Führungselement (31) aufweisen, das auf der zweiten Welle (3) angeordnet ist und dazu vorgesehen ist, sich zusammen mit der zweiten Welle (3) zu drehen, und das eine teilweise kreisförmige Innenfläche zur Führung eines Feststellelements (32) aufweist, das sich radial von der ersten Welle (2) erstreckt, und das vorgesehen ist, sich zusammen mit der ersten Welle (2) innerhalb der teilweise kreisförmigen Innenfläche zu drehen, um das zweite Zahnrad (5) in der ausgekuppelten Winkelposition (12) zu halten, wobei die Führungs- und Feststellelemente (31, 32) zueinander beweglich entlang der entsprechenden Wellen, an denen sie befestigt sind, zwischen einer Einkuppelposition (33), in denen das Führungselement und das Feststellelement miteinander in Eingriff stehen und einer Auskuppelposition (34) angeordnet sind, in der das Führungs- und das Feststellelement (31, 32) nicht miteinander in Eingriff stehen.

6. Eintourenkupplung (1) nach einem der Ansprüche 1 bis 5, **dadurch gekennzeichnet, dass** die Zeitsteuerungseinrichtung (14) eine Nockenwelle (35) aufweist, die vorgesehen ist, durch die Drehung der ersten Welle (2) angetrieben zu werden, wobei die Nockenwelle (35) mindestens eine erste und eine zweite Nocke (37, 38) und einen Schlepphebel (36) aufweist, der vorgesehen ist, um dem Umfang der Nocken (37, 38) während der Drehung der Nocken (37, 38) durch die Drehung der Nockenwelle (35) zu folgen, wobei die Nocken (37, 38) der Nockenwelle (35) bezüglich des Schlepphebels (36) zwischen einer ersten Position (39) und einer zweiten Position (40) beweglich angeordnet sind, sodass der Schlepphebel (36) dem Umfang der ersten Nocke (37) in der ersten Position (39) und dem Umfang der zweiten Nocke (38) in der zweiten Position (40) folgt, wobei der Schlepphebel (36) in der ersten Position (39) die Feststellmittel (17), Einkuppelmittel (15) und Auskuppelmittel (16) steuert, sodass eine einzelne Umdrehung des zweiten Zahnrads (5) erhalten wird, und dass der Schlepphebel (36) in der zweiten Position (40) die Feststellmittel (17) derart steuert, dass das zweite Zahnrad (5) in der ausgekuppelten Winkelposition (12) gehalten wird.

7. Eintourenkupplung (1) nach Anspruch 6, mindestens in Kombination mit den Ansprüchen 1, 3 und 5, **dadurch gekennzeichnet, dass** der Schlepphebel (36) entlang der Längsrichtung der Welle an der ersten (2) oder der zweiten Welle (3) verschiebbar angeordnet ist, wobei die Schiebbewegung des Schlepphebels (36) durch das Folgen des Umfangs der Nocken (37, 38) durch den Schlepphebel (37) angetrieben wird, und dass die Elemente der Feststellmittel (17), Einkuppelmittel (15) und Auskuppelmittel (16), die sich von der Welle, an der der Schlepphebel (36) angeordnet ist, sich von unterschiedlich erstreckenden Positionen entlang der Längsrichtung der Welle erstrecken, mit dem Schlepphebel (36) verbunden sind, wobei die Elemente der Feststellmittel (17), der Einkuppelmittel (15) und der Auskuppelmittel (16), die sich von der Welle, an der der Schlepphebel (36) angeordnet ist, erstrecken und die erste Nocke (37) derart eingerichtet ist, dass wenn der Schlepphebel (36) und die Nockenwelle (35) sich bezogen aufeinander in der ersten Position (39) befinden, die Einkuppelphase umfasst, dass der Schlepphebel (36) durch den Umfang der ersten Nocke (37) in eine erste Position (41) geschoben wird, in der das Führungselement (31) und das Feststellelement (32) der Feststellmittel (17) sich in der ausgekuppelten Position (34) befinden, und die ersten und zweiten Elemente (19, 20) der Einkuppelmittel (15) sich in der Einkuppelposition (23) befinden, wobei die erste Nocke (37) des Weiteren derart eingerichtet ist, dass die Auskuppelphase den Schritt aufweist, dass der Schlepphebel (36) anschließend in eine zweite Position (42) gleitet, in der die ersten und zweiten Elemente (25, 26) der Auskuppelmittel (16) in der eingekuppelten Position (29) sind und in der die Führungs- und Feststellelemente (31, 32) der Feststellmittel (17) in der ausgekuppelten Position (34) sind, wobei die erste Nocke (37) des Weiteren derart eingerichtet ist, dass die Feststellphase den Schritt aufweist, dass der Schlepphebel (36) nachfolgend in eine dritte Position (43) gleitet, in der die Befestigungsmittel (17) in der eingekuppelten Position (33) sind und in der die Elemente der Einkuppel- und Auskuppelmittel (15, 16) in der ausgekuppelten Position sind, wobei die Nockenwelle (35) und der Schlepphebel (36) vorgesehen sind, um sich bezogen aufeinander nacheinander in die zweite Position (42) zu bewegen.

8. Eintourenkupplung (1) nach Anspruch 6 oder 7, **dadurch gekennzeichnet, dass** der Schlepphebel (36) verschiebbar an der ersten Welle (2) angeordnet ist, wobei die Schiebbewegung des Schlepphebels (36) durch das Folgen des Umfangs der Nocken (37, 38) durch den Schlepphebel (36) angetrieben wird.

9. Eintourenkupplung (1) nach Anspruch 7 oder 8, **dadurch gekennzeichnet, dass** die Drehung der Nockenwelle (35) durch eine Antriebswelle (44) angetrieben wird, und dass die Antriebswelle (44) auch die Drehung der ersten Welle (2) derart antreibt, dass die Nockenwelle und die erste Welle (2) sich synchron drehen.

10. Eintourenkupplung (1) nach einem der vorhergehenden Ansprüche, **dadurch gekennzeichnet, dass** die Eintourenkupplung (1) ein gezahntes Element (49) aufweist, das zum Füllen der Öffnung (11) zwischen den ersten und zweiten Begrenzungszähnen (9, 10) vorgesehen ist, um Zähne (8) entlang des gesamten Umfangs des zweiten Zahnrads (5) bereitzustellen, sodass es aufgrund der Existenz des gezahnten Elements (49) möglich ist, das zweite Zahnrad (5) in eine Mehrzahl von vollständigen Umdrehungen anzutreiben.

11. Antriebssystem, das eine Eintourenkupplung (1) nach einem der Ansprüche 1 bis 10 aufweist, wobei eine erste Antriebswelle (2) des Antriebssystems, die vorgesehen ist, um sich im Wesentlichen kontinuierlich zu drehen, durch die Eintourenkupplung (1) mit einer zweiten Welle (3) des Antriebssystems verbunden ist, sodass die zweite Welle (3) durch die erste Welle (2) in einer einzelnen Umdrehung angetrieben werden kann, wobei das erste Zahnrad (4) der Kupplung (1) mit der ersten Welle (2) verbunden ist, und wobei das zweite Zahnrad (5) der Kupplung (1) mit der zweiten Welle (3) verbunden ist.

12. Quaderballenpresse (45) mit einem Antriebssystem nach Anspruch 11, wobei die zweite Welle (3) des Antriebssystems mit einem Raffer der Quaderballenpresse verbunden ist.

13. Verwendung einer Eintourenkupplung (1) nach einem der Ansprüche 1 bis 10 oder eines Antriebssystems nach Anspruch 11 oder einer Quaderballenpresse nach Anspruch 12, **dadurch gekennzeichnet, dass** die Zeitsteuerungseinrichtung (14) die Einkuppelmittel (15), Auskuppelmittel (16) und Feststellmittel (17) derart steuert, dass eine einzelne Umdrehung des zweiten Zahnrads (5) durch Folgendes erhalten wird:
- eine Einkuppelphase, wobei die Zeitsteuerungseinrichtung (14) die Einkuppelmittel (15) derart steuert, sodass das zweite Zahnrad (5) von der ausgekuppelten Winkelposition (12) in die eingekuppelte Winkelposition (13) gedreht wird,
- eine anschließende Antriebsphase, in der das erste Zahnrad (4) in Eingriff stehend das zweite Zahnrad (5) von der eingekuppelten Winkelposition (13) zu der Freigabewinkelposition (18) antreibt,
- eine darauffolgende Auskuppelphase, wobei die Zeitsteuerungseinrichtung (14) die Auskuppelmittel derart steuert, dass das zweite Zahnrad (5) aus der Freigabewinkelposition (18) in die ausgekuppelte Winkelposition (12) gedreht wird, und
- eine darauffolgende Feststellphase, wobei die Zeitsteuerungseinrichtung (14) die Feststellmittel (17) derart steuert, dass das zweite Zahnrad (5) in der ausgekuppelten Winkelposition (12) gehalten wird.

## Revendications

1. Embrayage à révolution unique (1) pour interconnecter mécaniquement un premier arbre d'entraînement (2), prévu pour être sensiblement mis en rotation en continu, à un second arbre (3) de telle sorte que le second arbre (3) peut être entraîné par le premier arbre (2) dans une seule révolution, l'embrayage (1) comprenant un premier engrenage (4) à relier au premier arbre (2), et l'embrayage (1) comprenant un second engrenage (5) à relier au second arbre (3), dans lequel une première partie angulaire (6) de la circonférence du second engrenage (5) est pourvue de dents (8) délimitées par une première et une seconde dents délimitantes (9, 10) et une seconde partie angulaire (7) de la circonférence du second engrenage (5) entre les première et seconde dents délimitantes (9, 10) forme une ouverture (11), dans lequel le premier engrenage (4) est agencé de sorte à enclencher en entraînement le second engrenage (5) sur la première partie angulaire (6) du second engrenage (5) et est agencé de sorte à désengrener le second engrenage (5) au niveau de la seconde partie angulaire (7) du second engrenage (5), l'ouverture (11) recevant les dents (8) du premier engrenage (4) à une position angulaire désengrenée (12) du second engrenage (5), dans lequel l'embrayage à révolution unique (1) comprend des moyens de fixation (17) pour maintenir le second engrenage (5) dans la position angulaire désengrenée (12), des moyens d'engagement (15) pour faire tourner le second embrayage (5) de la position angulaire désengrenée (12) jusqu'à une position angulaire engrenée (13) où le premier engrenage (4) enclenche en entraînement la première dent délimitante (9) du second engrenage (5) et des moyens de désengagement (16) pour faire tourner le second engrenage (5) d'une position angulaire de dégagement (18) où le premier engrenage (4) engrène en entraînement la seconde dent délimitante (10) du second engrenage (5) vers la position angulaire désengagée (12) après avoir tourné par entraînement à engrènement du premier engrenage (4) et dans lequel l'embrayage à révolution unique (1) comprend des moyens de cadencement (14) pour commander les moyens d'engagement (15), de désengagement (16) et de fixation (17) de sorte qu'une seule révolution du second engrenage (5) est obtenue par :
- une phase d'engagement, dans laquelle les moyens de cadencement (14) commandent les moyens d'engagement (15) de sorte que le second engrenage (5) est mis en rotation de la position angulaire désengagée (12) jusqu'à la position angulaire engagée (13),
- une phase d'entraînement ultérieure dans laquelle le premier engrenage (4) entraîne par engrènement le second engrenage (5) de la position angulaire engagée (13) jusqu'à la position angulaire de dégagement (18),
- une phase de désengagement ultérieure dans laquelle les moyens de cadencement (14) commandent les moyens de désengagement (16) de telle sorte que le second engrenage (5) est mis en rotation de la position angulaire de dégagement (18) jusqu'à la position angulaire désengagée (12) et
- une phase ultérieure de fixation dans laquelle les moyens de cadencement (14) commandent les moyens de fixation (17) de sorte que le second engrenage (5) est maintenu dans la position angulaire désengagée (12),
**caractérisé en ce que** les moyens d'engagement (15) comprennent un premier élément (19) s'étendant radialement à partir du premier (2) ou du second (3) arbre et un second élément (20) s'étendant à partir de l'autre respectif du premier (2) ou du second (3) arbre, les premier et second éléments (19, 20) étant agencés de sorte à tourner ensemble avec l'arbre (2, 3) à partir duquel ils s'étendent, le premier élément (19) comprenant un galet d'engagement (21) à son extrémité, le second élément (20) comprenant un trajet de guidage (22) pour recevoir le galet d'engagement (21) de sorte que le mouvement de rotation du premier arbre (2) est transmis au second arbre (3) lors de l'engagement des premier et second éléments (19, 20), faire tourner le second engrenage (5) de la position angulaire désengagée (12) jusqu'à la position angulaire engagée (13) dans laquelle le premier engrenage (4) engrène en entraînement la première dent délimitante (9) du second engrenage (5), les premier et second éléments (19, 20) étant montés de façon mobile l'un par rapport à l'autre le long des arbres respectifs (2, 3) sur lequel ils sont montés entre une position d'engagement (23) dans laquelle les premier et second éléments (19, 20) s'engagent l'un avec l'autre et une position de désengagement (24) dans laquelle les premier et second éléments (19, 20) ne s'engagent pas l'un avec l'autre.

2. Embrayage à révolution unique (1) selon la revendication 1, **caractérisé en ce que** le premier élément (19) s'étend à partir du premier arbre (2) et le second élément (20) s'étend à partir du second arbre (3).

3. Embrayage à révolution unique (1) selon l'une quelconque des revendications 1 ou 2, **caractérisé en ce que** les moyens de désengagement (16) comprennent un premier élément (25) s'étendant radialement à partir du premier (2) ou du second arbre (3) et un second élément (26) s'étendant à partir de l'autre arbre respectif, les premier et second éléments (25, 26) étant agencés pour tourner ensemble avec l'arbre à partir duquel ils s'étendent, le premier élément (25) comprenant un galet de désengagement (27) à son extrémité, le second élément (26) comprenant un trajet de guidage (28) pour recevoir le galet de désengagement (27) de sorte que le mouvement de rotation du premier arbre (2) est transmis au second arbre (3) lors de l'engagement des premier et second éléments (25, 26), faire tourner le second engrenage (5) vers la position angulaire désengagée (12) après avoir atteint la seconde dent délimitante (10) après avoir été entraîné en rotation par le premier engrenage (4), les premier et second éléments (25, 26) étant montés de façon mobile l'un par rapport à l'autre le long des arbres respectifs sur lequel ils sont montés entre une position d'engagement (29) dans laquelle les premier et second éléments (25, 26) s'engagent l'un avec l'autre et une position de désengagement (30) dans laquelle les premier et second éléments (25, 26) ne s'engagent pas l'un avec l'autre.

4. Embrayage à révolution unique (1) selon la revendication 3, **caractérisé en ce que** le premier élément (25) s'étend à partir du premier (2) et le second élément (26) s'étend à partir du deuxième arbre

5. Embrayage à révolution unique (1) selon l'une quelconque des revendications 1 - 4, **caractérisé en ce que** les moyens de fixation (17) comprennent un élément de guidage (31) monté sur le second arbre (3) et agencé de façon à tourner ensemble avec le second arbre (3) et ayant une surface intérieure en partie circulaire pour guider un élément de fixation (32) s'étendant radialement à partir du premier arbre (2) et agencé pour tourner ensemble avec le premier arbre (2) à l'intérieur de la surface intérieure en partie circulaire, pour maintenir le second engrenage (5) dans la position angulaire désengagée (12), l'élément de guidage et l'élément de fixation (31, 32) étant montés de façon mobile l'un par rapport à l'autre le long des arbres respectifs sur lequel ils sont montés entre une position d'engagement (33) dans laquelle l'élément de guidage et l'élément de fixation s'engagent l'un avec l'autre et une position de désengagement (34) dans laquelle l'élément de guidage et l'élément de fixation (31, 32) ne s'engagent pas l'un avec l'autre.

6. Embrayage à révolution unique (1) selon l'une quelconque des revendications 1 - 5, **caractérisé en ce que** les moyens de cadencement (14) comprennent un arbre à cames (35) agencé pour être entraîné par la rotation du premier arbre (2), l'arbre à cames (35) comprenant au moins une première et seconde cames (37, 38) et un galet suiveur (36) agencé pour suivre la circonférence des cames (37, 38) pendant la rotation des cames (37, 38) par rotation de l'arbre à cames (35), les cames (37, 38) de l'arbre à cames (35) étant montées de façon mobile par rapport au galet suiveur (36) entre une première position (39) et une seconde position (40), de sorte que le galet suiveur (36) suit la circonférence de la première came (37) dans la première position (39) et la circonférence de la seconde came (38) dans la seconde position (40), le galet suiveur (36) dans la première position (39) commandant les moyens de fixation (17), d'engagement (15) et de désengagement (16) de sorte qu'une seule révolution du second engrenage (5) est obtenue et le galet suiveur (36) dans la seconde position (40) commandant les moyens de fixation (17) de sorte que le second engrenage (5) est maintenu dans la position angulaire désengagée (12).

7. Embrayage à révolution unique (1) selon la revendication 6 rattachée au moins à l'une des revendications 1, 3 et 5, **caractérisé en ce que** le galet suiveur (36) est monté de façon coulissante sur le premier (2) ou le second arbre (3) le long d'une direction longitudinale de l'arbre, le mouvement de coulissement du galet suiveur (36) étant engendré par le galet suiveur (36) qui suit la circonférence des cames (37, 38), et **en ce que** les éléments des moyens de fixation (17), d'engagement (15) et de désengagement (16) s'étendant à partir de l'arbre sur lequel le galet suiveur (36) est monté à partir de positions d'extension distinctes le long de la direction longitudinale de l'arbre, sont reliés au galet suiveur (36), les élément des moyens de fixation (17), d'engagement (15) et de désengagement (16) s'étendant à partir de l'arbre sur lequel le galet suiveur (36) est monté et la première came (37) étant configurés de telle sorte que lorsque le galet suiveur (36) et l'arbre à cames (35) sont dans la première position (39) l'un par rapport à l'autre, la phase d'engagement comprend le glissement du galet suiveur (36) par la circonférence de la première came (37) jusqu'à une première position (41) dans laquelle l'élément de guidage (31) et de fixation (32) des moyens de fixation (17) sont dans la position de désengagement (34) et les premier et second éléments (19, 20) des moyens d'engagement (15) sont dans la position d'engagement (23), la première came (37) étant en outre configurée de sorte que la phase de désengagement comprend le glissement ultérieur du galet suiveur (36) jusqu'à une seconde position (42) dans laquelle les premier et second éléments (25, 26) des moyens de désengagement (16) sont dans la position d'engagement (29) et dans laquelle les éléments de guidage et de fixation (31, 32) des moyens de fixation (17) sont dans la position de désengagement (34), et la première came (37) étant en outre configurée de sorte que la phase de fixation comprend le glissement ultérieur du galet suiveur (36) jusqu'à une troisième position (43) dans laquelle les moyens de fixation (17) sont dans la position d'engagement (33) et dans laquelle les éléments des moyens d'engagement et de désengagement (15, 16) sont dans la position de désengagement, l'arbre à cames (35) et le galet suiveur (36) étant agencés de façon à se déplacer par la suite jusqu'à la seconde position (42) l'un par rapport à l'autre.

8. Embrayage à révolution unique (1) selon la revendication 6 ou 7, **caractérisé en ce que** le galet suiveur (36) est monté de façon coulissante sur le premier arbre (2), le mouvement de coulissement du galet suiveur (36) étant entraîné par le galet suiveur (36) qui suit la circonférence des cames (37, 38).

9. Embrayage à révolution unique (1) selon la revendication 7 ou 8, **caractérisé en ce que** la rotation de l'arbre à cames (35) est entraînée par un arbre d'entraînement (44) et **en ce que** l'arbre d'entraînement (44) entraîne également la rotation du premier arbre (2) de sorte que l'arbre à cames et le premier arbre (2) tournent de façon synchrone.

10. Embrayage à révolution unique (1) selon l'une quelconque des revendications précédentes, **caractérisé en ce que** l'embrayage à révolution unique (1) comprend un élément denté (49) qui est agencé pour remplir l'ouverture (11) entre les première et seconde dents délimitantes (9, 10) de façon à procurer des dents (8) le long de la circonférence entière du second engrenage (5) de sorte à être capable d'entraîner, par la présence de l'élément denté (49), le second engrenage (5) dans une pluralité de révolutions complètes.

11. Système d'entraînement comprenant un embrayage à révolution unique (1) selon l'une quelconque des revendications 1 à 10, dans lequel un premier arbre d'entraînement (2) du système d'entraînement agencé pour être mis en rotation sensiblement en continu est relié par l'embrayage à révolution unique (1) à un second arbre (3) du système d'entraînement de sorte que le second arbre (3) peut être entraîné par le premier arbre (2) dans une seule révolution, le premier engrenage (4) de l'embrayage (1) étant relié au premier arbre (2) et le second engrenage (5) de l'embrayage (1) étant relié au second arbre (3).

12. Ramasseuse-presse à balles rectangulaires (45) comprenant un système d'entraînement selon la revendication 11, dans laquelle le second arbre (3) du système d'entraînement est relié à un dispositif de bourrage de la ramasseuse-presse à balles rectangulaires.

13. Utilisation d'un embrayage à révolution unique selon l'une quelconque des revendications 1 à 10 ou d'un système d'entraînement selon la revendication 11 ou d'une ramasseuse-presse à balles rectangulaires selon la revendication 12, **caractérisé en ce que** les moyens de cadencement (14) commandent les moyens d'engagement (15), de désengagement (16) et de fixation (17) de sorte qu'une seule révolution du second engrenage (5) est obtenue par :
- une phase d'engagement, dans laquelle les moyens de cadencement (14) commandent les moyens d'engagement (15) de sorte que le second engrenage (5) est mis en rotation de la position angulaire désengagée (12) jusqu'à la position angulaire engagée (13),
- une phase d'entraînement ultérieure dans laquelle le premier engrenage (4) entraîne par engrènement le second engrenage (5) de la position angulaire engagée (13) jusqu'à la position angulaire de dégagement (18),
- une phase de désengagement ultérieure dans laquelle les moyens de cadencement (14) commandent les moyens de désengagement (16) de telle sorte que le second engrenage (5) est mis en rotation de la position angulaire de dégagement (18) jusqu'à la position angulaire désengagée (12), et
- une phase ultérieure de fixation dans laquelle les moyens de cadencement (14) commandent les moyens de fixation (17) de sorte que le second engrenage (5) est maintenu dans la position angulaire désengagée (12).
